# EUROPEAN PATENT SPECIFICATION

(11) **EP 4 523 843 B1**
(45) Date of publication and mention of the grant of the patent: **22.04.2026**
(21) Application number: 24198213.1
(22) Date of filing: 03.09.2024
(51) Int. Cl.: B23Q 1/54, B23Q 3/10

(54) **CLAMPING DEVICE**
SPANNVORRICHTUNG
DISPOSITIF DE SERRAGE

(30) Priority: 15.09.2023 IT 202300019062
(43) Date of publication of application: 19.03.2025
(73) Proprietor: FCS System Srl, 31032 Casale sul Sile (TV) (IT)
(72) Inventor: CALZAVARA, Andrea, 31057 Silea (TV) (IT); TREVISIOL, Nico, 31052 Maserada sul Piave (TV) (IT)
(74) Representative: Gallo, Luca

(56) References cited:
- EP-B1- 2 879 835
- US-A- 5 738 344

## Description

### Field of the invention

The present invention relates to a clamping device for holding a semifinished product in position with respect to a support base, according to the preamble of the independent claim 1 (see for example US 5 738 344 A). In particular, the clamping device in question is advantageously used in the mechanical industry so as to hold in position bodies designed to be subjected to various processing operations.

More particularly, the clamping device subject of the present invention can be advantageously used to hold in position, with respect to the support base, in particular of a machine tool (for example of the CNC type), a body to be processed, which is advantageously made of metal material, or made of composite material, or made of any other material.

Therefore, the invention relates to the industrial field of precision mechanics.

### State of the art

In the field of processing mechanical components through turning operations, milling operations, drilling operations etc. there particularly arises the need for stably holding the semi-finished products to be processed.

To this end, the clamping devices of the known type are generally fixed to a support base, usually coupled to or part of a machine tool for processing semi-finished products. In particular, the support bases of the known type are provided with a plurality of seats, in particular threaded, for fixing the clamping device, the fixing seats being distributed along a matrix of points to determine a plurality of pre-established operative positions in which the clamping device can be arranged to support the semi-finished product, available for the machine tool.

In greater detail, the clamping devices of the known type are generally fixed, on one side, to the support base and, on the other side, to the semi-finished product to be retained, and in particular they are interposed between each other. In order to be fixed to the semi-finished product and to the support base, the clamping devices of the known type are generally provided with fixing means comprising tensioners, the tensioners particularly consisting of a first threaded rod screwed to the semi-finished product and of a second threaded rod screwed to the support base. The two threaded rods of the fixing means are further partially inserted inside corresponding housing seats obtained in the central body of the clamping device and they are locked to the latter using anchoring means, usually comprising a pair of a pair of jaws adapted to act on each threaded rod. In particular, the jaws of the anchoring means of the known type are generally slidably mounted on the central body with a corresponding one of the first and the secure threaded rod of the fixing means being interposed and they can be actuated to slide approaching each other, for example through a screw-and-nut mechanism, to close on the threaded rod in question and, therefore, clamp and secure it to the central body of the clamping device.

In greater detail, the clamping is carried out stably given that the jaws of the anchoring means and the portion of the threaded rods designed to be interposed between the jaws mentioned above are shaped so that, when the jaws are closed, the latter exert forces which, being discharged through the threaded rods, on the one hand, pressure-pull the central body of the clamping device against the support base and, on the other hand, pressure-pull the central body mentioned above against the semi-finished product.

However, the devices for clamping semi-finished products of the known type briefly described above revealed some practical drawbacks.

A main drawback of the clamping devices of the known type lies in the inability to precisely adjust the position in which such clamping devices are connected to the semi-finished product to be held in position. As a matter of fact, holding a semi-finished product to the base requires using a set made up of multiple clamping devices, all of which are provided with a substantially cylindrical-shaped main body which extends between two bases which are parallel to each other, one designed to rest against the base and one designed to rest against the semi-finished product, and all of them have the same height. However, it is clear that the surface of the semi-finished product arranged counter-faced to the base, or the surface on which there are obtained the threaded seats designed to be engaged by elements for tensioning the clamping devices, may not be a perfectly planar surface and could therefore have uneven geometric tolerances along the entire extension thereof. Therefore, the points where the threaded seats are provided could be arranged at slightly different distances from the support base or the threaded seats mentioned above could have inclinations that are slightly different from each other. As a result, when there is used a set of clamping devices according to the prior art to hold in position a semi-finished product (in the set all the clamping devices having the same shape and sizes) and the threaded rods of each device being clamped by using jaws of the anchoring means, there are generated pulling or compression stresses at least in the area adjacent to the threaded seats engaged by the rods, the stresses increasing proportionally as the as the difference between the height of the clamping device and the distance of the corresponding threaded seat from the base increases and it could affect the quality of the processing operations carried out on the semi-finished product.

A further drawback of the clamping devices of the known type lies in their inability to adapt to semi-finished products provided with uneven shapes, for example provided with outer surfaces which, once the semi-finished product has been released from the support base, are inclined with respect to the support base and which are non-planar.

### Summary of the invention

In this situation, the technical problem underlying the present invention is therefore to overcome the drawbacks of the prior art, by providing a clamping device for holding a semifinished product in position with respect to a support base, which allows it to adapt to the particular height of the point where the semi-finished product is clamped and/or to the inclination of the surface of the semi-finished product at the point where the semi-finished product mentioned above is clamped.

A further object of the present invention is to provide a clamping device, which avoids the onset of unwanted pulling and compression stresses on the semi-finished product to be fixed to the support base.

A further object of the present invention is to provide a clamping device, which allows to eliminate any unwanted pulling and compression stresses which developed in the semi-finished product during the mechanical processing steps to which the semi-finished product has been subjected.

A further object of the present invention is to provide a clamping device, which is operatively entirely reliable.

A further object of the present invention is to provide a clamping device, that is simple and cost-effective to manufacture and use.

### Brief description of the drawings

The technical characteristics of the invention, according to the objects mentioned above, are clearly observable from the content of the claims outlined below and the advantages thereof will be more apparent from the detailed description below, provided with reference to the attached drawings, which represent an embodiment thereof provided purely by way of non-limiting example, wherein:
- Fig. 1 shows a perspective view of a clamping device subject of the present invention according to a first embodiment;
- Fig. 2 shows a top plan view of the clamping device of figure 1;
- Fig. 3 shows a lateral cross-sectional view of the clamping device of figure 1, the section being obtained along the line III-III of figure 2;
- Fig. 4 shows a perspective view of a part of a first connection body of a first clamping assembly of the clamping device of figure 1;
- Fig. 5 shows a lateral cross-sectional perspective view of the part of figure 4;
- Fig. 6 shows a perspective view of a second belleville washer of second elastic means of the clamping device, both according to the first embodiment and according to the second embodiment shown in figures 7 to 10;
- Fig. 7 shows a perspective view of a clamping device subject of the present invention according to a second embodiment;
- Fig. 8 shows a top plan view of the clamping device of figure 7;
- Fig. 9 shows a lateral cross-sectional view of the clamping device of figure 1, the section being obtained along the line IX-IX of figure 8;
- figure 10 shows a lateral cross-sectional perspective view of a part of the first connection of the clamping device of figure 7, the section being obtained along the line IX-IX of figure 8.

### Detailed description of a preferred embodiment

With reference to the attached drawings, a clamping device according to the present invention has been indicated in its entirety with 1.

Such clamping device 1 is advantageously intended to be used for holding a semifinished product in position with respect to a support base, and in particular it is intended to maintain the semi-finished product at a pre-established position available for processing operations to which it is designed to be subjected.

In greater detail, the support base may belong to an operating machine, such as for example a CNC operating machine, provided to subject the semi-finished product to processing operations, such as for example chip removal operations (milling, surface finish treatments, drilling, etc.).

Otherwise, the support base may be a different component with respect to the operating machine, the component being designed to be installed adjacently to the latter and it is provided to maintain, through the clamping device 1 subject of the present invention, the semi-finished product in position with respect to a tool device of the operating machine mentioned above.

According to the invention, the clamping device 1 comprises at least one first clamping assembly 2, which is intended to be removably fixed to one of the support bases and the semi-finished product comprises at least one first connection body 3.

In greater detail, the first clamping assembly 2 is advantageously provided with first coupling means 34 provided to removably fix the first clamping assembly 2 mentioned above to the support base or to the semi-finished product.

Preferably, the first coupling means 34 are threaded in order to be able to removably fix the first clamping assembly 2 to the support base or to the semi-finished product.

As a matter of fact, conventionally, the semi-finished product is provided with first threaded holes at the points where it should be clamped to the support base and the support base is provided with a plurality of second threaded holes distributed along a regular matrix of points, so as to be able to select the second hole in the position most suitable for clamping the semi-finished product to the support base through the clamping device 1 in question.

Therefore, this allows to facilitate fixing by screwing the first clamping assembly 2 to the support base or to the semi-finished product using the first threaded coupling means 34.

Furthermore, the clamping device 1 in question comprises at least one second clamping assembly 4, which is intended to be removably fixed to the other of the semi-finished product and the support base and comprises at least one second connection body 5.

Such first and second connection body 3, 5 are mechanically engaged to mutually move one with respect to the other between a plurality of first adjustment positions.

In greater detail, the second clamping assembly 4 is advantageously provided with second coupling means 35 provided to removably fix the second clamping assembly 4 mentioned above to the support base or to the semi-finished product, that is in particular to the one to which the first clamping assembly 2 is not removably fixed.

Preferably, the second coupling means 3 are threaded in order to be able to removably fix the second clamping assembly 4 to the support base or to the semi-finished product.

Therefore, this allows to facilitate the fixing by screwing the second clamping assembly 4 to the support base or to the semi-finished product through second threaded coupling means 35 (given that, as explained above, the semi-finished product and the support base are respectively conventionally provided with first and second threaded holes).

In addition, the clamping device 1 according to the invention comprises first locking means 6, which are mechanically associated with the first and the second connection body 3, 5 and they can be switched between a first constraint condition in which they lock the first and the second connection body 3, 5 into one of the first adjustment positions, and a first release condition, in which they free the first and second connection body 3, 5 to mutually move one with respect to the other.

The clamping device 1 in question further comprises a first actuation piston 7, which is slidably inserted into a first guide chamber 8 obtained on the first connection body 3 to translate between a first actuation position, in which it maintains the first locking means 6 in the first constraint condition, and a second actuation position, in which it maintains the first locking means 6 in the first release condition.

The clamping device 1 in question comprises first elastic means 9, which are inserted into the first guide chamber 8 and they are provided to force the first actuation piston 7 into one of the first actuation position and the second actuation position, and first actuator means 10, which are provided to move the first actuation piston 7 into the other of the first and the second actuation position making the first elastic means 9 yield elastically.

In greater detail, providing the first elastic means 9 in the first guide chamber 8 ensures that the first actuation piston 7 is always maintained in one of the first and the second actuation position, so as to respectively maintain the first locking means 6 in the first constraint condition or in the first release condition, while providing the first actuator means 10, which may be actuated to make the first elastic means 9 yield elastically, allows to move the actuation piston 7 into the other of the first and the second actuation position to switch the first locking means 6, therefore locking or releasing the relative displacement between first and second connection body 3, 5 depending on the needs.

In this manner, operatively, when the semi-finished product is fixed to the support base by means of multiple clamping devices 1, it is possible to act on the first actuator means 10 (actuating or disabling them depending on whether the first elastic means 9 force the first actuation piston 7 in the first or second actuation position) so as to ensure that, during a processing operation (for example removal of chips, finishing, milling, drilling and the like), the first actuation piston 7 is in the first position to maintain the first locking means 6 in the first constraint condition, resulting in the fact that during such processing operation the first and second connection body 3. 5 are in a specific first adjustment position and precisely hold the semi-finished product in position with respect to the support base. Furthermore, operatively, once the processing operation mentioned above has terminated, still acting on the first actuator means 10, it is possible to move the first actuation piston 7 in the second actuation position to switch the first locking means 6 in the first release position, so that the first and second connection body 3, 5 can settle in a different first adjustment position compensating for possible pulling and/or compression stresses which developed in the semi-finished product during the processing operation, for example due to thermal deformations and the like. Therefore, advantageously, the switching of the first locking means 6 in the first release condition by means of the first actuation piston 7, which is moved through the first elastic means 9 and the first actuator means 10, ensures that the semi-finished product is free of compression and/or pulling stresses following any processing operation, so that the semi-finished product mentioned above can be subjected, after the first locking means 6 have been returned to the first constraint condition, to another subsequent processing operation without any possible compression and/or pulling stresses affecting the quality thereof.

In order to allow an easy production of the device 1 in question, the first connection body 3 advantageously comprises a first component 3' and a second component 3", which are fixed to each other (for example using screws or by welding) and together delimit the first guide chamber 8.

In this manner, when manufacturing the device 1 according to the invention, it is sufficient to introduce the first actuation piston 7 and the first elastic means 9 in a cavity obtained on one of the first and the second component 3', 3" and adapted to at least partially define the first guide chamber 8 when the first and the second component 3', 3" are fixed and, subsequently, fix the first and the second component 3', 3" to each other using screws or by welding so as to delimit the guide seat 8 containing at least the first actuation piston 7 and the first elastic means 9 therein.

As shown in the attached drawings, preferably, the first guide chamber 8 extends mainly (in particular only) inside the first component 3' and the second component 3" is fixed to the first component 3' (for example through screws or by welding) to close the first guide chamber 8 mentioned above, so that the first guide chamber 8 is delimited both by the first and by the second component 3', 3".

Advantageously, according to the embodiments shown in the attached figures, the first elastic means 9 are provided to force the first actuation piston 7 in the first actuation position and the first actuator means 10 are provided to move the first actuation piston 7 in the second actuation position making the first elastic means 9 yield elastically.

In this manner, the first elastic means 9 automatically maintain the first locking means 6 in the first constraint condition forcing the first actuation piston 7 in the first actuation position, so that the first and second connection body 3, 5 are constantly maintained in a specific first adjustment position during the entire carrying out of the processing operations. Furthermore, in this manner, it is sufficient to act on the first actuator means 10 briefly only at the end of the processing operations mentioned above to switch the first locking means 6 in the first release condition and allow the mutual movement of the first and second connection body 3, 5 so as to compensate for any compression and/or pulling stresses that developed.

Preferably, the first elastic means 9 comprise at least one first belleville washer 36 and, even more preferably, a plurality of first belleville washers 36 arranged on each other.

In particular, the use of the at least one first belleville washer 36 is particularly advantageous with the first elastic means 9 which are provided to push the first actuation piston 7 in the first actuation position (such as for example in the first and second shown embodiment). As a matter of fact, the first belleville washers 36 generally have a stiffness greater than that of the helical springs and therefore, in this case, they are able to maintain he first locking means 6 in the first constraint condition with greater safety, so as to prevent the stresses transmitted to the semi-finished product during the processing operations from causing the first and the second connection body 3, 5 from moving with respect to each other changing the first adjustment position in an unwanted manner.

Advantageously, the first actuator means 10 comprise at least one first conveyance duct 32 obtained on the first connection body 3, placed in fluid communication with the first guide chamber 8 and designed to convey a pressurised fluid against the first actuation piston 7 to make the first elastic means 9 yield elastically and push the first actuation piston 7 into the other of the first actuation position and the second actuation position.

In particular, such conformation of the first actuator means 10 with first conveyance duct 32 makes the clamping device 1 in question particularly simple, given that in order to make the first elastic means 9 yield elastically, it is sufficient to connect the first conveyance duct 32 mentioned above to means for supplying a pressurised fluid, which can for example be a compressed air or pressurised oil supply circuit (normally available for any company or workshop operating in the mechanical industry), and actuate the supply means mentioned above when needed.

In greater detail, the first actuation piston 7 is provided with a first face 7' and with an opposite second face 7".

Furthermore, preferably, the first actuation means 9 are arranged abutting against the first face 7' mentioned above and the first actuator means 10 are provided to make the first elastic means 9 yield elastically by acting on the second face 7".

In particular, the first conveyance duct 32 of the first actuator means 10 is provided to convey the pressurised fluid against the second face 7" so as to make the first elastic means 9 yield elastically.

Preferably, the first guide chamber 8 is delimited by a first end surface 8', which is arranged counter-faced to the first face 7' of the first actuation piston 7, and by an opposite second end surface 8", which is arranged counter-faced to the second face 7" of the first actuation piston 7.

In addition, the first guide chamber 8 is also preferably delimited by an inner lateral surface 8‴, which extends from the first end surface 8' to the second end surface 8" to enclose the first guide chamber 8 therewith.

In greater detail, the first actuation piston 7 is provided to translate in the first guide chamber 8 between the first and the second actuation position along the movement direction thereof.

Furthermore, the first and the second end surface 8', 8" of the first guide chamber 8 are, preferably, transversal to the movement direction and, more particularly, orthogonal to the movement direction mentioned above.

In particular, the first elastic means 9 are interposed between the aforementioned first end surface 8' and the first face 7' of the first actuation piston 7.

In greater detail, the conveyance duct 32 mentioned above extends between a receipt opening 32', which is arranged on an outer lateral surface 57 of the first connection body 3, and a conveyance opening 32", which is placed in fluid connection with the first guide chamber 8, in particular arranged on the inner lateral surface 8‴ adjacently to the second end surface 8" or at least partly directly obtained on the second end surface 8" (according to embodiments not shown in which there are no other actuation pistons and other elastic means in the first guide chamber 8), or obtained on the lateral surface 8‴ spaced both from the first and the second end surface 8', 8" (according to the shown embodiments in which, as better described below, another actuation piston and other elastic means are present in the first guide 8).

Furthermore, the first actuation piston 7 advantageously carries mounted thereon at least one elastic gasket, which, in greater detail, prevents the pressurised fluid introduced by the first conveyance duct 32 in the portion of the first guide chamber 8 which extends between the second end surface 8" and the second face 7" of the first actuation piston 7 from seeping in the portion of the first guide chamber 8 which extends between the first end surface 8' and the first face 7'.

In particular, the at least one elastic gasket mentioned above is pressed against the inner lateral surface 8‴ of the first guide chamber 8, so as to prevent the pressurised fluid supplied by the first conveyance duct 32 from seeping on the sides of the first actuation piston 7.

According to the idea underlying the present invention, the first and the second connection body 3, 5 are slidably associated along a translation direction to move one with respect to the other in the plurality of the first adjustment positions.

In greater detail, the fact that the first and the second connection body 3, 5 are slidably associated along the translation direction ensures that the clamping device 1 in question can be used for clamping to the support base of the semi-finished products having a clamping surface (facing towards the support base) with uneven dimensional tolerances, which carry at different distances from the support base the various points in which the clamping devices 1 will be clamped to the semi-finished product.

Still, according to the idea underlying the present invention, the second connection body 5 is provided with a guide seat 19 at least partially internally delimited by a first lateral surface 20 and the first connection body 3 is at least partially inserted into said guide seat 19 slidably along the translation direction.

Furthermore, the first connection body 3 is provided with a locking portion 21 contained in said guide seat 19 and it is deformable between an expanded configuration, in which it exerts a pressure against the first lateral surface 20 to prevent the first connection body 3 from sliding into said guide seat 19, and an undeformed configuration, in which it does not exert pressure against the first lateral surface 20 allowing the first connection body 3 to slide in the guide seat 19.

In this manner, when the locking portion 21 is in expanded configuration, the first and the second connection body 3, 5 are prevented from sliding one with respect to the other along the translation direction by the friction force exerted by the locking portion 21 against the first lateral surface 20 of the guide seat 19 of the second connection body 5.

Therefore, in greater detail, the first locking means 6 are provided to maintain the locking portion 21 of the first adjustment body 3 in the expanded configuration when they are in the first constraint condition and they are provided to maintain the locking portion 21 in the undeformed configuration when they are in the first release condition.

Advantageously, in order to allow the locking portion 21 to switch between the expanded configuration and the undeformed configuration in the easiest manner possible, the locking portion 21 mentioned above of the first connection body 3 comprises a plurality of flexible fins 22 extending substantially parallel to the translation direction.

In greater detail, the flexible fins 22, extending substantially parallel to the translation direction, are foldable around axes transversal to the translation direction mentioned above, so that, in expanded configuration, the aforementioned folded flexible fins 22 increase the size, on a plane transversal to the translation direction, of the locking portion 21, therefore enabling the latter to interfere with the first lateral surface 20.

Advantageously, a containment volume 24, which is at least partially internally delimited by a second lateral surface 26 is obtained in the locking portion 21.

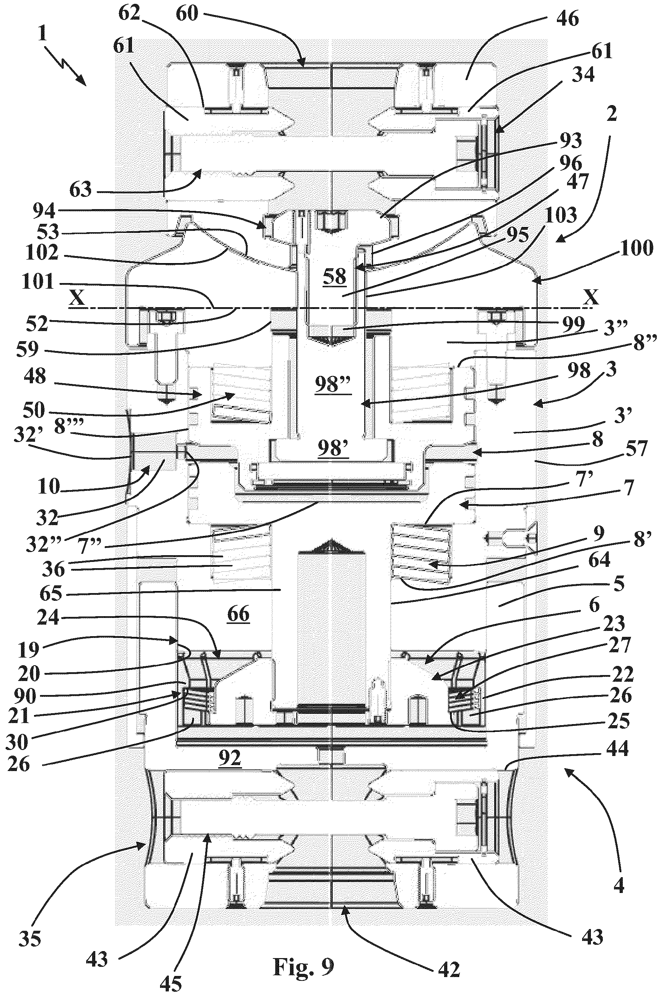

As observable in the attached figures 9, the containment volume 24 mentioned above is preferably delimited by the flexible fins 22, on which the second lateral surface 26 extends.

Furthermore, the first locking means 6 advantageously comprise a pusher body 23, which is slidably inserted into the containment volume 24, it is integrally joined at least in translation with the first actuation piston 7 and it comprises a thrust surface 25 adapted to interfere, directly or indirectly, with the second lateral surface 26 in order to push said locking portion 21 in the expanded configuration when the first actuation piston 7 is in the first actuation position.

In greater detail, in order to allow the pusher body 23 to be integrally joined at least in translation to the first actuation piston 7, the first connection body 3 is provided with at least one first communication opening 64 placed in communication with the first guide chamber 8 and the containment volume 24. Furthermore, the first actuation piston 7 and the pusher body 23 are mechanically connected to each other through the first communication opening 64 mentioned above.

In particular, the first actuation piston 7 comprises a connection barrel 65 arranged to traverse the first communication opening 64, at least partly extending in the containment volume 24 and fixed (for example by screwing, by shape-interlocking or the like) to the pusher body 23.

According to a variant embodiment, the second lateral surface 26 is tapered and the thrust surface 25 of the thrust surface 23 is shaped so that, when the first actuation piston 7 is in the first actuation position, it interferes with the second lateral surface 26 to carry the locking portion 21 in expanded configuration, and that, when the first actuation piston 7 is in the second actuation position, it does not interfere with the second lateral surface 26 to leave the locking portion 21 in the undeformed configuration.

Otherwise, according to the embodiments shown in the attached figures, the first locking means 6 advantageously comprise second elastic means 27, which are arranged in said containment volume 24, are arranged counter-faced to the second lateral surface 26, and they are susceptible to interfere, directly or indirectly, with the thrust surface 25 of the pusher body 23.

In greater detail, such second elastic means 27 can be actuated by the pusher body 23 mentioned above between a release configuration and a compression configuration.

In particular, when the first actuation piston 7 is in the second actuation position there occurs the release configuration, in which the second elastic means 27 are provided with a first radial overall dimension and with a first axial overall dimension so as not to interfere with the second lateral surface 26.

Furthermore, in particular, when the first actuation piston 7 is in the first actuation position there occurs the compression configuration, in which the second elastic means 27 are provided with a second radial overall dimension greater than the first radial overall dimension and with a second axial overall dimension smaller than the first axial overall dimension so as to interfere with the second lateral surface 26 and push the locking portion 21 in the expanded configuration.

Therefore, according to the shown embodiments, when the first actuation piston 7 is in the first actuation position, the thrust surface 25 of the pusher body 23, preferably, does not directly interfere with the second lateral surface 26, but it interferes with the second lateral surface 26 mentioned above through the second elastic means 27.

Advantageously, the second elastic means 27 comprise at least one second belleville washer 33 and, preferably, comprise a plurality of belleville washers 33 arranged on each other.

In greater detail, the at least one second belleville washer 33 extends with annular shape around an extension axis thereof substantially parallel to the translation direction and delimits a central opening 28 traversed by the pusher body 23.

Furthermore, such at least one second belleville washer 33 is advantageously provided with a larger base 29 thereof, which is in contact with the second lateral surface 26 and is arranged, directly or indirectly, resting against an abutment surface 30 extending in the containment volume 24 transversely to the second lateral surface 26.

In addition, the at least one second belleville washer 33 mentioned above is advantageously provided with a smaller base 31, which is opposite to the larger base 29 and it is susceptible to receive, directly or indirectly, against itself the thrust surface 25 of the pusher body 23 in order to be actuated between the compression configuration and the release configuration.

In particular, should there be provided for multiple second belleville washers 33, only one of them is provided with the larger base 29 thereof arranged resting directly against the abutment surface 30 and only one of them is provided with the smaller base 31 thereof susceptible to receive the thrust surface 25 directly against itself.

Advantageously, the first connection body 3 is provided with a partitioning wall 66 interposed between the first guide chamber 8 and the containment volume 24, on the partitioning wall 66 there being preferably obtained the first communication opening 64.

Advantageously, the first elastic means 9 are provided to force the first actuation piston 7 in the first actuation position and the actuator means 10 are provided to move the first actuation piston 7 in the second actuation position making the first elastic means 9 yield elastically.

Preferably, the first elastic means 9 are interposed between the first actuation piston 7 and the partitioning wall 66. In addition, the second elastic means 27 are interposed between the abutment surface 30 and the thrust surface 25 of the pusher body 23, the thrust surface 25 in particular being faced towards the partitioning wall 66.

According to a variant embodiment not shown, the abutment surface 30 may directly extend on the partitioning wall 66 on the side of the containment volume 24.

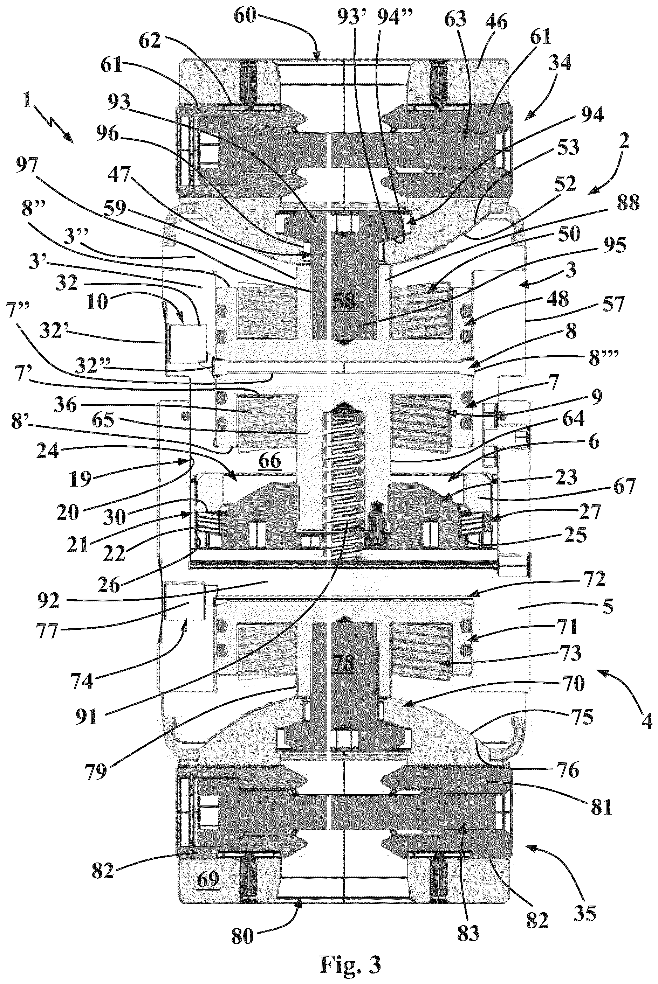

Otherwise, according to the first embodiment, as shown in figure 3, the abutment surface 30 is advantageously defined by a support ring 67 arranged against the partitioning wall 66 and in particular housed in the containment volume 24.

Still otherwise, according to the second embodiment, each flexible fin 22 is made of a single body with a retention step 90. In addition, on each of such retention steps 90 there extends a part of the abutment surface 30 facing towards the opposite direction with respect to the partitioning wall 66.

In particular, the first face 7' of the first actuation piston 7 is faced toward the partitioning wall 66 and the first end surface 8' of the first guide chamber 8 extends on the partitioning wall 66 mentioned above, with the first elastic means 9 which are preferably interposed between the aforementioned first end surface 8' and the first face 7' of the first actuation piston 7.

According to the two depicted embodiments, in order to ensure that the first elastic means 9 can advantageously maintain the first actuation piston 7 in the first actuation position, the second elastic means 27 are provided with a lower stiffness with respect to that of the first elastic means 9.

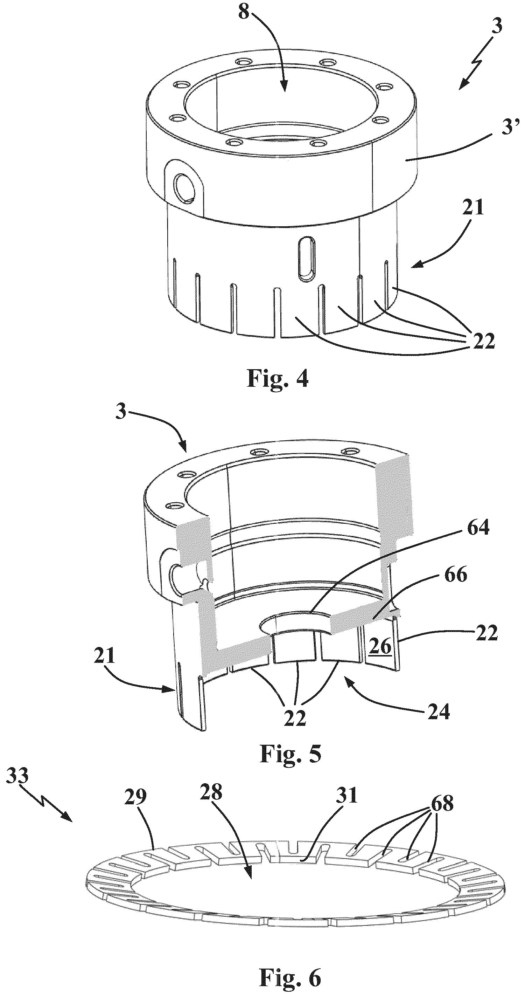

Preferably, as shown in figure 6, in order to confer low stiffness to the second elastic means 27 (in particular lower stiffness with respect to that of the first elastic means 9), the at least one second belleville washer 33 is provided with a plurality of weakening grooves 68, which in particular extend one starting from the lower base 31 and one starting from the larger base 29 in an alternating fashion throughout the circumferential extension of the second belleville washer 33 around the extension axis.

In this manner, the first elastic means 9 tend to maintain the first actuation piston 7 moved away from the partitioning wall 66, so that the pusher body 23 is maintained approached to the abutment surface 30 and maintains, through the thrust surface 25 thereof, the second elastic means 27 in compression configuration, therefore ensuring that the latter take the second radial overall dimension and therefore interfere with the second lateral surface 26 carrying the locking portion 21 in expanded configuration.

Furthermore, the device 1 in question may comprise auxiliary elastic means 91, which are arranged in the guide seat 19 and they are provided to exert on the pusher body 23 or on the connection barrel 65 of the first actuation piston 7 (should the pusher body 23 be for example traversed by a through hole that is screw or coupling-engaged by the connection barrel 65) an elastic force having the same direction as the one exerted by the first elastic means 9.

In this manner, together with the first elastic means 9, the auxiliary elastic means 91 participate in overcoming the elastic force exerted by the second elastic means 27, so that the first elastic means 9 safely maintain the first actuation piston 7 in the first actuation position, which in turn maintains, through the pusher body 23, the second elastic means 27 in expanded configuration so as to block the mutual sliding between the first and the second connection body 3, 5.

In particular, the second connection body 5 comprises a bottom wall 92, which is transversal to the lateral wall 20, is arranged to delimit the guide seat 19 together with the lateral wall 20 mentioned above and it is faced towards the partitioning wall 66. Furthermore, the auxiliary elastic means 91 are interposed between such bottom wall 92 and the pusher body 23 or the connection barrel 65.

According to a variant not shown of the clamping device 1 according to the invention, both the first and the second connection body 3, 5 are advantageously intended to be removably directly fixed, respectively by means of the first and of the second coupling means 34, 35 (in particular threaded), one to the support base and the other to the semi-finished product or vice versa.

According to such variant embodiment not shown, the first coupling means 34 advantageously comprise at least one first tensioner, which is provided with a first shaped head which can be inserted into a first coupling seat obtained on the first connection body 3 and with a first threaded shank extending starting from the aforementioned first shaped head and intended to be screwed to the support base or to the semi-finished product, and two first jaws, which are slidably inserted into a first guide groove obtained on the first connection body 3 to intercept the first coupling seat and they can be switched, by means of a first screw-and-nut mechanism, between an engagement configuration, in which they are closed against the first shaped head housed in the first coupling seat, and a first release configuration, in which they are spaced apart from the first shaped head.

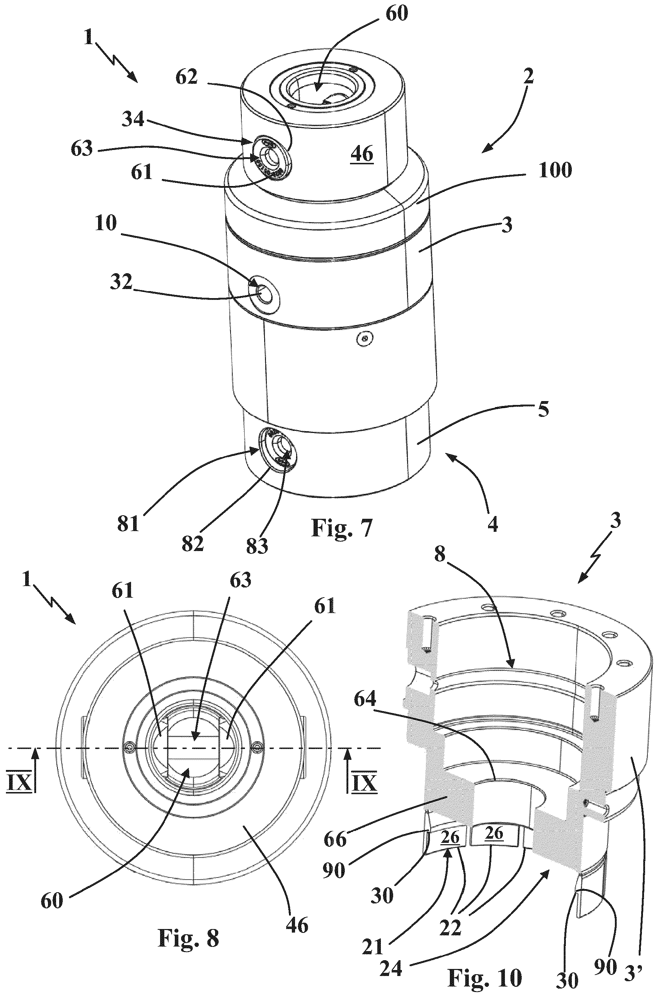

Furthermore, according to the variant embodiment mentioned above, as will be addressed again below with reference to the embodiment shown in the attached figures 7 to 10, the second coupling means 35 advantageously comprise at least one second pulling element (not shown), which is provided with a second shaped head which can be inserted into a second coupling seat 42 obtained on the second connection body 5 and with a second threaded shank extending starting from the second shaped head mentioned above and intended to be screwed to the support base or to the semi-finished product, and two second jaws 43, which are slidably inserted into a second guide groove 44 obtained on the second connection body 5 to intercept the second coupling seat 42 and they can be switched, by means of a second screw-and-nut mechanism 45, between a second engagement configuration, in which they are closed against the second shaped head housed in the second coupling seat 42, and a second release configuration, in which they are spaced apart from the second shaped head.

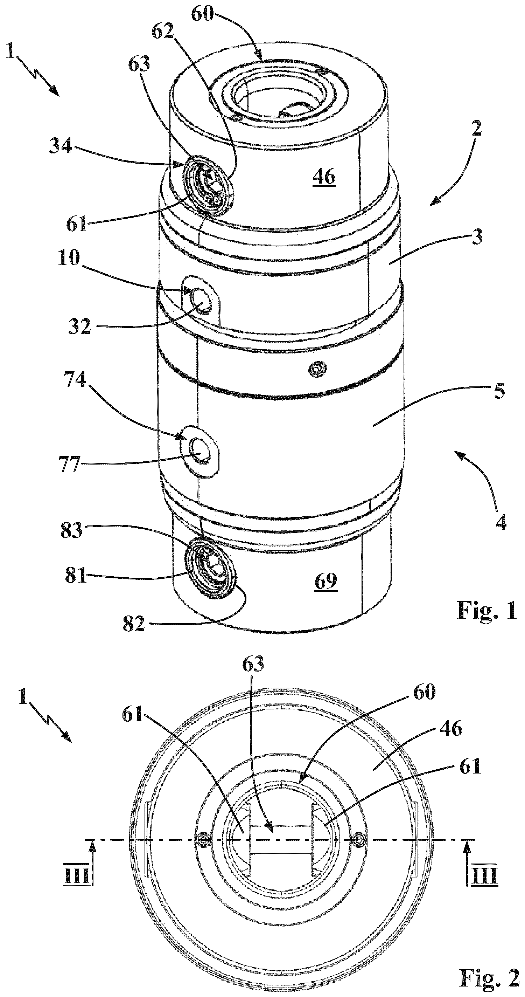

Both according to the first embodiment shown in the attached figures 1 to 6 and according to the second embodiment shown in the attached figures 7 to 10, the first clamping assembly 2 advantageously comprises a third connection body 46, which is rotatably connected to the first connection body 3 around at least one rotation axis in order to ensure that such first and third connection body 3, 46 are movable one with respect to the other in a plurality of second adjustment positions.

Furthermore, the first clamping assembly 2 advantageously comprises second locking means 47, which are mechanically associated with the first and the third connection body 3, 46 and they can be switched between a second constraint condition, in which they lock the first and the third connection body 3, 46 in one of the second adjustment positions, and a second release condition, in which they free the first and the third connection body 3, 46 to mutually rotate one with respect to the other.

Furthermore, such first clamping assembly 2, advantageously comprises a second actuation piston 48, which is slidably inserted into the first guide chamber 8 in order to translate between a third actuation position, in which it maintains said second locking means 47 in the second constraint condition, and a fourth actuation position, in which it maintains said second locking means 47 in the second release condition.

The first clamping assembly 2 mentioned above advantageously further comprises third elastic means 50, which are inserted into the first guide chamber 8 and they are provided to force the second actuation piston 48 into one of the third actuation position and the fourth actuation position.

Similarly to the first elastic means 9, the third elastic means 50 preferably comprise at least one third belleville washer and, in particular, more than one third belleville washer arranged on each other.

Furthermore, the first actuator means 10 (besides being provided to move the first actuation piston 7 making the first elastic means 9 yield elastically) are also advantageously provided to move the second actuation piston 48 in the other of the third and the fourth actuation position making the third elastic means 50 yield elastically.

In greater detail, the third connection body 46, the second locking means 47, the second actuation piston 48, the third elastic means 50 allow to increase, when the first locking means 6 are in the first release condition and the second locking means 47 are in the second release condition, the degrees of freedom of the clamping device 1 useful to compensate pulling and/or compression stresses induced by the processing operations to which the semi-finished product is subjected.

Furthermore, the provision of the second actuation piston 48 and of the third elastic means 50 in the same first guide chamber 8 in which there are arranged the first actuation piston 7 and the first elastic means 9 allows to increase through the third connection body 46 the degrees of freedom useful to compensate for the stresses induced by the processing operations maintaining the clamping device 1 in question as compact as possible, therefore avoiding the provision of further actuation means (distinct with respect to the first actuation means 10) and of a further guide chamber obtained in the first connection body 3 and adapted to contain the second actuation piston 48 and the third elastic means 50.

Without departing from the scope of protection of the present invention, according to further embodiments not shown, the first connection body 3 is provided with a further guide chamber, the second actuation piston 48 is slidably inserted into such further guide chamber to translate between the third actuation position and the fourth actuation position, the third elastic means 50 are housed in the further guide chamber mentioned above. Furthermore, there are provided for further actuation means (distinct with respect to the first actuation means 10) provided to move the second actuation piston 48 into the other of the third and fourth actuation position (other with respect to the one in which the second actuation piston 48 is forced by third elastic means 50) making the third elastic means 50 yield elastically. In particular, both in the first and in the second embodiment (wherein the second actuation piston 48 is slidably inserted into the first guide chamber 8), the first actuator means 10 advantageously comprise a first conveyance duct 32 placed in fluid connection with the first guide chamber 8 and provided to convey a pressurised fluid both against the first actuation piston 7 to make the first elastic means 9 yield elastically and push the first actuation piston 7 into the other of the first and of the second actuation piston (that is, in other words, other with respect to the position in which the first actuation piston 7 is forced by the first elastic means 9), and against the second actuation piston 48 to make the third elastic means 50 yield elastically and push the second actuation piston 48 into the other of the third and fourth actuation position (that is, in other words, other with respect to the position in which the second actuation piston 48 is forced by the third elastic means 50).

In greater detail, in such case, the first conveyance duct 32 mentioned above extends between a receipt opening 32', which is arranged on an outer lateral surface 57 of the first connection body 3 (in particular an outer lateral surface 57 of the first component 3' of the first connection body 3), and a conveyance opening 32", which is placed in fluid connection with the first guide chamber 8, in particular obtained on the inner lateral surface 8‴ in a position interposed between the first and the second actuation piston 7, 48. In this manner, by introducing into the first conveyance duct 32 a pressurised fluid, the latter is capable of simultaneously moving both the first and the second actuation piston 7, 48.

Advantageously, the third elastic means 50 are provided to force the second actuation piston 48 in the third actuation position and the first actuator means 10 are provided to move the second actuation piston 48 in the fourth actuation position making the third elastic means 50 yield elastically.

In this manner, the third elastic means 50 ensure that the second locking means 47 are automatically in the second constraint condition so as to precisely maintain the first and the third connection body 3, 46 in a desired second adjustment position throughout the processing operations to which the semi-finished product is subjected and ensure that it is sufficient to briefly act on the first actuator means 10 at the end of the processing operations mentioned above so as to compensate for possible pulling and/or compression stresses which developed during the processing operations.

Advantageously, the first connection body 3 is provided with a first sliding surface 52 and the third connection body 46 is provided with a second sliding surface 53, which is in particular faced towards the first sliding surface 52.

In greater detail, one of the first and the second sliding surface 52, 53 is convex-shaped, so as to allow a rotation of the third connection body 46 with respect to the first connection body 3 between various adjustment positions.

Furthermore, the second locking means 47 advantageously comprise a first pulling element 58, which is mechanically associated with the third connection body 46 and is integrally joined at least in translation with second actuation piston 48 to pull, with the second actuation piston 48 in the third actuation position, the first sliding surface 52 by pressure against the second sliding surface 53, directly or indirectly (in greater detail, the expression "indirectly" shall be used to indicate that the first and the third connection body 3, 46 may have one or more other components interposed between them).

In this manner, when the actuation piston 48 is in the third actuation position, the third connection body 46 and the first connection body 3 are pulled one towards the other by the first pulling element 58 so that the exerted pressure generates friction at the first sliding surface 52 and the second sliding surface 53 (the friction is generated both in the case where the first and the second sliding surface 52, 53 are directly in contact, and in the case where there are one or more other components interposed between them) which locks the first and the third connection body 3, 46 in a desired second adjustment position.

In particular, the first pulling element 58 of the second locking means 47 is mechanically associated with the third connection body 46 so as to be able to pull it towards the first connection body 3 when the second actuation piston 48 is in the third actuation position and it is mechanically associated with the first connection body 3 given that it is integrally joined in translation with the second actuation piston 48 inserted into the first guide chamber 8 of the first connection body 3.

In order to allow the first pulling element 58 to be integrally joined at least in translation with the second actuation piston 48 slidably inserted into the first guide chamber 8, the first connection body 3 is preferably provided with a second communication opening 59 (in particular obtained on the second component 3") extending starting from the first sliding surface 52, communicating with the first guide chamber 8 and traversed by such first pulling element 58, which is mechanically connected to the second actuation piston 48 so as to be integrally joined at least in translation with it.

Furthermore, the first pulling element 58 of the second locking means 47 is preferably provided with a widened head 93, which is housed with clearance in a containment chamber 94 obtained in the third connection body 46, and with a shank 95 extending starting from the widened head 93, fixed to the second actuation piston 48 (directly fixed or fixed using other components) and arranged to traverse the second communication opening 59 and a third communication opening 96, which is obtained on the third connection body 46 substantially at the second communication opening 59, it communicates with the containment chamber 94 and it is smaller in size with respect to the widened head 93 to prevent it from exiting from the containment chamber 94.

In this manner, when the second actuation piston 48 is in the third actuation position to switch the second locking means 47 in the second release condition, the second actuation piston 48 mentioned above drives, using the shank 95, the widened head 93 of the first pulling element 58 towards the first connection body 3, so that the widened head mentioned above 93 pulls the second sliding surface 53 of the third connection body 46 by pressure against the first sliding surface 52, directly or indirectly with one or more other components interposed.

In particular, the widened head 93 is provided with a locking surface 93' rounded and facing towards the first connection body 3 and the containment body 94 is provided with an abutment surface 94' facing towards and substantially counter-shaped with respect to the locking surface 93' mentioned above.

Therefore, in this manner, when the second actuation piston 47 is in the fourth actuation position, the locking surface 93' and the abutment surface 94' are spaced apart to allow the first and the third connection body 3, 46 to rotate between the second adjustment positions and, when the second actuation piston 48 is in the first actuation position, the locking surface 93' abuts against the abutment surface 94' without the pressure exerted by the locking surface 93' on the abutment surface 94' risking to change the first adjustment position established between the first and the third connection body 3, 46 (given that the locking surface 93' is rounded).

According to the first embodiment shown in the attached figures 1 to 6, the first sliding surface 52 and the second sliding surface 53 advantageously slide on each other with the first connection body 3 and the third connection body 46 which rotate around at least one rotation axis.

In greater detail, the first pulling element 58 is integrally joined in translation with the second actuation piston 48 to pull in pressurised abutment the first sliding surface 52 against the second sliding surface 53 with the second actuation piston 48 in the third actuation position.

Preferably, in order to make the first pulling element 58 integrally joined in translation with the second actuation piston 48, the shank 95 of the first pulling element 58 is threaded and the second actuation piston 48 is provided with a corresponding first threaded seat 97 engaged by the shank 95.

In particular, according to such first embodiment, the first pulling element 58 is capable of pulling in pressure abutment the first and the second sliding surface 52, 53 because they are directly in contact with each other, given that the first and the second sliding surface 52, 53 slide on each other with the first connection body 3 and the third connection body 46 which rotate around the at least one rotation axis.

Preferably, one of the first sliding surface 52 and the second sliding surface 53 is concave with substantially spherical cap shape and the other of the first sliding surface 52 and the second sliding surface 53 is convex with substantially spherical cap shape, so that the first connection body 3 and the third connection body 46 are rotatably connected to each other around three mutually orthogonal rotation axes.

According to the second embodiment shown in the attached figures 7 to 10, the first clamping assembly 2 advantageously comprises a fourth connection body 100, which is interposed between the first connection body 3 and the third connection body 46.

Such fourth connection body 100 is advantageously traversed by the first pulling element 58 and it is provided with its own third sliding surface 101 in contact with the first sliding surface 52 and with its own fourth sliding surface 102 in contact with the second sliding surface 53.

Preferably, such fourth connection body 100 is provided with a fourth communication opening 103 extending between the third and the fourth sliding surface 101, 102 and traversed by the first pulling element 58, in particular by the shank 95 of the latter.

In greater detail, the fourth connection body 100 mentioned above is slidably associated with the first connection body 3 along an adjustment plane X transversal (in particular orthogonal) to the translation direction (that is the direction along which the first and the second connection body 3, 5 may slide one with respect to the other) in a plurality of third adjustment positions. Furthermore, it carries rotatably mounted thereon the third connection body 46 around at least one rotation axis in order to ensure that the first connection body 3 and the third connection body 46 are movable one with respect to the other in the plurality of the second adjustment positions.

In this manner, the second adjustment positions in the second embodiment may be distinguished from each other not only due to the different orientation of the third connection body 46 with respect to the first connection body 3, but also due to a different point on the adjustment plane X in which the third connection body 46 is placed with respect to the first connection body 3, given that the third connection body 46 mentioned above may rotate with respect to the fourth connection body 100 on which it is mounted and the fourth connection body 100 may translate in a plurality of distinct third adjustment positions on the adjustment plane X with respect to the first connection body 3.

Furthermore, the first pulling element 58 is preferably integrally joined in translation with the second actuation piston 48 to pull, with the second actuation piston 48 in the third actuation position, the second sliding surface 53 in pressurised abutment against the fourth sliding surface 102 and the third sliding surface 101 in pressurised abutment against the first sliding surface 52.

In particular, the first sliding surface 52 and the third sliding surface 101 are planar and coincident with the adjustment plane X.

Furthermore, preferably, one of the second sliding surface 53 and the fourth sliding surface 102 is concave with substantially spherical cap shape and the other of the second sliding surface 53 and the fourth sliding surface 102 is convex with substantially spherical cap shape, so that the fourth connection body 100 and the third connection body 46 are rotatably connected to each other around three mutually orthogonal rotation axes.

Preferably, the first pulling element 58 is fixed to a slider 98 (for example by screwing the shank 95 in a specific second threaded seat 99 obtained on the slider 98) slidably associated with the second actuation piston 48 on a movement plane parallel to the adjustment plane X.

In particular, such slider 98 is provided with a flattened base 98' slidably inserted into a translation seat obtained in the second actuation piston 48 and with a barrel 98", which extends protruding from the flattened base 98', it is provided with the second threaded seat 99 engaged by the shank 95 of the first pulling element 58 and substantially fittingly traverses the fourth communication opening 103 of the fourth connection body 100.

In this manner, when the fourth connection body 100 translates on the adjustment plane X, the barrel of the slider 98 which substantially fittingly occupies the fourth communication opening 103 in turn translates thanks to its own flattened base inserted into the translation seat of the second actuation piston 48.

According to a variant embodiment not shown, there may be provided for the fourth connection body 100 without the third connection body 46 being present. In this case, in order to lock the fourth connection body 100 with respect to the first connection body 3 or to release the fourth connection body 100 to translate with two degrees of freedom on the adjustment plane X with respect to the first connection body 3, there are provided for substantially the same second locking means 47 of the second embodiment shown in the attached figures 7 to 10 (obviously resized so as to be able to act on the fourth connection body 100 without the third connection body 46 being present).

In this case, the first clamping assembly 2 advantageously comprises a fourth connection body 100, which is slidably associated with the first connection body 3 with two degrees of freedom on an adjustment plane X transversal (in particular orthogonal) to the translation direction (that is the direction along which the first and the second connection body 3, 5 can slide one with respect to the other) in a plurality of third adjustment positions. Furthermore, the second locking means 47 are mechanically associated with the first and with the fourth connection body 3, 100 and they can be switched between a second constraint condition, in which they lock the first and the fourth connection body 3, 100 in one of the third adjustment positions, and a second release condition, in which they free the first and the fourth connection body 3, 100 to translate one with respect to the other with two degrees of freedom on the adjustment plane X.

Furthermore, as mentioned above, there is advantageously provided for a second actuation piston 48, which is slidably inserted into the first guide chamber 8 in order to translate between a third actuation position, in which it maintains said second locking means 47 in the second constraint condition, and a fourth actuation position, in which it maintains said second locking means 47 in the second release condition.

As described above, the first clamping assembly 2 advantageously further comprises third elastic means 50, which are inserted into the first guide chamber 8 and they are provided to force the second actuation piston 48 into one of the third actuation position and the fourth actuation position.

Furthermore, the first actuator means 10 (besides being provided to move the first actuation piston 7 making the first elastic means 9 yield elastically) are also advantageously provided to move the second actuation piston 48 in the other of the third and the fourth actuation position making the third elastic means 50 yield elastically.

Preferably, according to such embodiment without third connection body 46 and provided with the fourth connection body 100, the fourth connection body 100 mentioned above is provided with its own third sliding surface 101 in contact with the first sliding surface 52 of the first connection body 3 (and instead there is not provided for the fourth sliding surface 102 given that there is no third connection body 46).

In this case, the second locking means 47 advantageously comprise a first pulling element 58, which (is not mechanically associated with the third connection body 46 given that the latter is absent, but) is mechanically associated with the fourth connection body 100 and it is integrally joined at least in translation with the second actuation piston 48 to pull, with the second actuation piston 48 in the third actuation position, the first sliding surface 52 in pressurised abutment against the third sliding surface 101.

In greater detail, according to such embodiment provided with the fourth connection body 100 and without the third connection body 46, the fourth connection body 100 is provided with a retaining surface, which is faced in the opposite direction with respect to the third sliding surface 101, and with a fourth communication opening 103, which extends between the retaining surface and the third sliding surface 100. Furthermore, the first pulling element 58 is provided with a widened head 93, which is arranged adjacently to the retaining surface (for example, such widened head 93 is contained in a corresponding containment chamber obtained in the fourth connection body 100 and partially delimited by the retaining surface mentioned above), and with a shank 95 extending starting from the widened head 93, mechanically connected to the second actuation piston 48 and arranged to traverse the second communication opening 59 and the fourth communication opening 103 mentioned above.

In this manner, when the second actuation piston 48 is in the third actuation position, the widened head 93 is driven by the shank 95 towards the first connection body 3 and it presses against the retaining surface to push the third sliding surface 101 of the fourth connection body 100 abutting against the first sliding surface 52 of the first connection body 3, therefore locking the first and the fourth connection body 3, 100 in a third adjustment position due to the friction which occurs at the first and third sliding surface 52, 101. In particular, also according to the aforementioned embodiment not shown, the first sliding surface 52 and the third sliding surface 101 are planar and coincident with the adjustment plane X.

Preferably, also should there not be provided for the third connection body 46, the first pulling element 58 is fixed to a slider 98 (for example by screwing the shank 95 in a specific second threaded seat 99 obtained on the slider 98) slidably associated with the second actuation piston 48 on a movement plane parallel to the adjustment plane X.

In particular, such slider 98 is provided with a flattened base 98' slidably inserted into a translation seat obtained in the second actuation piston 48 and with a barrel 98", which extends protruding from the flattened base 98', it is provided with the second threaded seat 99 engaged by the shank 95 of the first pulling element 58 and substantially fittingly traverses the fourth communication opening 103 of the fourth connection body 100.

In this manner, when the second actuation piston 48 is in the fourth actuation position, the fourth connection body 100 and the first pulling element 58 fixed to the slider 98 may slide together on the adjustment plane X with two degrees of freedom, given that the barrel 98" of the slider 98 substantially fittingly traverses the fourth communication opening 103 and the flattened base 98' is slidably inserted into the translation seat of the second actuation piston 48.

Otherwise, the shank 95 of the first pulling element 58 may be directly fixed to the second actuation piston 48 (for example by screwing the shank 95 in a specific threaded seat obtained on the second actuation piston 48) and traverse with clearance the fourth communication opening 103 of the fourth connection body 100 (in this case, the maximum translation possible on the adjustment plane X that can be carried out by the fourth connection body 100 with respect to the first connection body 3 depends on the size difference between the diameter of the shank 95 and of the fourth communication opening 103).

According to the embodiment not shown provided with the fourth connection body 100 and without the third connection body 46, the first coupling means 34 advantageously comprise at least one fifth pulling element (not shown), which is provided with a fifth shaped head which can be inserted into a fifth coupling seat obtained on the fourth connection body 100 and with a fifth threaded shank extending starting from the fifth shaped head mentioned above and intended to be screwed to the support base or to the semi-finished product, and two fifth jaws, which are slidably inserted into a fifth guide groove obtained on the fourth connection body 100 to intercept the fifth coupling seat and they can be switched, by means of a fifth screw-and-nut mechanism, between a fifth engagement configuration, in which they are closed against the fifth shaped head housed in the fifth coupling seat, and a fifth release configuration, in which they are spaced apart from the fifth shaped head.

Advantageously, according to the first and the second embodiment shown, the first coupling means 34 advantageously comprise at least one third pulling element (not shown), which is provided with a third shaped head which can be inserted into a third coupling seat 60 obtained on the third connection body 46 and with a third threaded shank extending starting from the third shaped head mentioned above intended to be screwed to the support base or to the semi-finished product, and two third jaws 61, which are slidably inserted into a third guide groove 62 obtained on the third connection body 46 to intercept the third coupling seat 60 and they can be switched, by means of a third screw-and-nut mechanism 63, between a third engagement configuration, in which they are closed against the third shaped head housed in the third coupling seat 60, and a third release configuration, in which they are spaced apart from the third shaped head.

Furthermore, as mentioned above, the second embodiment shown provides for that the second coupling means 35 comprise a second pulling element with the second shaped head thereof inserted into the second coupling means 42 obtained on the second coupling seat 5, two second jaws 43 and a second screw-and-nut mechanism 45. Therefore, the second clamping assembly 2 can be removably fixed to the semi-finished product or to the support base directly at the second connection body 5.

Otherwise, as provided for in the first embodiment, the second clamping assembly 2 may comprise further connection bodies.

As a matter of fact, according to the first embodiment mentioned above, the second clamping assembly 4 advantageously comprises a fifth connection body 69, which is rotatably connected to the second connection body 5 around at least one rotation axis so as to ensure that such second and fifth connection body 5, 69 are movable one with respect to the other in a plurality of fourth adjustment positions.

Furthermore, the second clamping assembly 4 advantageously comprises third locking means 70, which are mechanically associated with the second and the fifth connection body 5, 69 and they can be switched between a third constraint condition, in which they block the second and the fifth connection body 5, 69 in one of the fourth adjustment positions, and a third release condition, in which they release the second and the fifth connection body 5, 69 to mutually rotate one with respect to the other.

Furthermore, such second clamping assembly 4 advantageously comprises a third actuation piston 71, which is slidably inserted into a second guide chamber 72 obtained on one of the second and the fifth connection body 5, 69 in order to translate between a fifth actuation position, in which it maintains the third locking means 70 in the third constraint condition, and a sixth actuation position, in which it maintains the third locking means 70 in the third release condition.

The second clamping assembly 4 mentioned above advantageously further comprises fourth elastic means 73, which are inserted into the second guide chamber 72 and they are provided to force the third actuation piston 71 in one of the fifth and the sixth actuation position, and second actuator means 74, which are provided to move the third actuation piston 71 into the other of the fifth and the sixth actuation position making the fourth elastic means 73 yield elastically.

Advantageously, the fourth elastic means 73 are provided to force the third actuation piston 71 into the fifth actuation position and the second actuator means 74 are provided to move the third actuation piston 71 in the sixth actuation position making the fourth elastic means 73 yield elastically.

In this manner, the fourth elastic means 73 ensure that the third locking means 70 are automatically in the third constraint condition so as to precisely maintain the second and the fifth connection body 5, 69 in a desired fourth adjustment position throughout the processing operations to which the semi-finished product is subjected and which is sufficient to briefly act on the second actuator means 74 at the end of the processing operations mentioned above so as to compensate for possible pulling and/or compression stresses which developed during the processing operations.

Preferably, in order to allow maximum freedom of mutual movement between the second and the third connection body 5, 69, the second and the fifth connection body 5, 69 are rotatably connected around three mutually orthogonal rotation axes to move one with respect to the other in the plurality of fourth adjustment positions.

Advantageously, the second connection body 5 is provided with a fifth sliding surface 75 and the fifth connection body 69 is provided with a sixth sliding surface 76, the fifth and sixth sliding surface 75, 76 slide on each other with the second and the fifth connection body 5, 69 which rotate around the at least one rotation axis.

Preferably, one of the fifth and the sixth sliding surface 75, 76 is concave with substantially spherical cap shape and the other of the fifth and the sixth sliding surface 75, 76 is convex with substantially spherical cap shape, so that the second and the fifth connection body 5, 69 are advantageously rotatably connected to each other around three mutually orthogonal rotation axes.

Advantageously, the second actuator means 74 comprise at least one second conveyance duct 77 obtained on the one between the second and the fifth connection body 5, 69 on which there is obtained the second guide chamber 72, placed in fluid communication with the second guide chamber 72 and provided to convey a pressurised fluid against the third actuation piston 71 so as to make the fourth elastic means 73 yield elastically and push the third actuation piston 71 in the other of the fifth actuation position and the sixth actuation position.

Preferably, the second guide chamber 72 for the third actuation piston 71 is obtained on the second connection body 5.

As a result, the second conveyance duct 77 is in turn preferably obtained on the second connection body 5.

Furthermore, the third locking means 70 advantageously comprise a third pulling element 78, which is mechanically associated with the one between the second and the fifth connection body 5, 69 on which there is not obtained the second guide chamber 72 and it is integrally joined at least in translation with the third actuation piston 71 to pull in pressurised abutment the fifth sliding surface 75 against the sixth sliding surface 76 with the third actuation piston 71 in the fifth actuation position.

In particular, in order to allow the second pulling element 78 to be integrally joined at least in translation with the third actuation piston 71 slidably inserted into the second guide chamber 72, the one between the second and the fifth connection body 5, 69 on which there is obtained the second guide chamber 72 is provided with a fifth communication opening 79 extending starting from the corresponding fifth or sixth sliding surface 75, 76, communicating with the second guide chamber 72 and traversed by such second pulling element 78, which is mechanically connected to the third actuation piston 71 so as to be integrally joined at least in translation therewith.

As shown in figure 3, given that the second guide chamber 72 is advantageously obtained on the second connection body 5, the second pulling element 78 is mechanically associated with the fifth connection body 69 and the fifth communication opening 79 is obtained on the second connection body 5 mentioned above.

Furthermore, according to the first embodiment mentioned above, the second coupling means 35 advantageously comprise at least one fourth pulling element (not shown), which is provided with a fourth shaped head which can be inserted into a fourth coupling seat 80 obtained on the fifth connection body 69 and with a fourth threaded shank extending starting from the fourth shaped head mentioned above and intended to be screwed to the support base or to the semi-finished product, and two fourth jaws 81, which are slidably inserted into a fourth guide groove 82 obtained on the fifth connection body 69 to intercept the fourth coupling seat 80 and they can be switched, by means of a fourth screw-and-nut mechanism 83, between a fourth engagement configuration, in which they are closed against the fourth shaped head housed in the fourth coupling seat 80, and a fourth release configuration, in which they are spaced apart from the fourth shaped head.

In this manner, in the first embodiment, the fifth connection body 69 can be directly removably fixed to the support base or to the semi-finished product using second coupling means 35.

In greater detail, the first embodiment of the clamping device 1 has great versatility given that it can allow to compensate for:
- a change in the distance between the semi-finished product and the support base following a processing operation, through the first and second connection body 3, 5 which are slidably associated with each other; and also
- a significant change in the inclination between the semi-finished product and the support base, through the third and fifth connection body 46, 69 rotatably connected around the at least one rotation axis respectively to the first and to the second connection body 3, 5.

Furthermore, also the second embodiment of the clamping device 1 has great versatility given that it can allow to compensate for:
- a change in the distance between the semi-finished product and the support base following a processing operation, similarly to the first embodiment, through the first and second connection body 3, 5 which are slidably associated with each other;
- a change in the inclination between the semi-finished product and the support base, through the third connection body 46 rotatably connected around the at least one rotation axis to the first connection body 3; and also
- a misalignment in which the clamping device 1 is removably fixed to the support base and to the semi-finished product through the fourth connection body 100 which is slidably associated with the first connection body 3 on the adjustment plane X.

Therefore, the invention thus conceived attains the pre-established objects.

## Claims

1. Clamping device for holding a semifinished product in position with respect to a support base, which comprises:
- at least one first clamping assembly (2), which is intended to be removably fixed to one of said support base and said semi-finished product and it comprises at least one first connection body (3);
- at least one second clamping assembly (4), which is intended to be removably fixed to the other of said semi- finished product and said support base and it comprises at least one second connection body (5); said first and second connection body (3, 5) being mechanically engaged to mutually move one with respect to the other between a plurality of first adjustment positions; said first and second connection body (3, 5) being slidably associated along a translation direction to move one with respect to the other in said plurality of said first adjustment positions;
- first locking means (6), which are mechanically associated with said first and with said second connection body (3, 5) and they can be switched between a first constraint condition, in which they lock said first and second connection body (3, 5) into one of said first adjustment positions, and a first release condition, in which they free said first and second connection body (3, 5) to mutually move one with respect to the other;
- a first actuation piston (7), which is slidably inserted into a first guide chamber (8) obtained on said first connection body (3) in order to translate between a first actuation position, in which it maintains said first locking means (6) in said first constraint condition, and a second actuation position, in which it maintains said first locking means (6) in said first release condition;
- first elastic means (9), which are inserted into said first guide chamber (8) and they are provided to force said first actuation piston (7) into one of said first actuation position and said second actuation position;
- first actuator means (10), which are provided to move said first actuation piston (7) into the other of said first and second actuation position, making said first elastic means (9) yield elastically;
said clamping device (1) being **characterized in that** said second connection body (5) is provided with a guide seat (19) at least partially internally delimited by a first lateral surface (20) and said first connection body (3) is at least partially inserted into said guide seat (19) slidably along said translation direction;
said first connection body (3) being provided with a locking portion (21) contained in said guide seat (19) and deformable between an expanded configuration, in which it exerts a pressure against said first lateral surface (20) to prevent said first connection body (3) from sliding into said guide seat (19), and an undeformed configuration, in which it does not exert pressure against said first lateral surface (20) allowing said first connection body (3) to slide in said guide seat (19);
said first locking means (6) being provided to maintain the locking portion (21) of said first connection body (3) in said expanded configuration when they are in said first constraint condition and being provided to maintain said locking portion (21) in said undeformed configuration when they are in said first release condition.

2. Clamping device according to claim 1, **characterized in that** said first elastic means (9) are provided to force said first actuation piston (7) in said first actuation position;
said first actuator means (10), being provided to move said first actuation piston (7) in said second actuation position, making said first elastic means (9) yield elastically.

3. Clamping device according to claim 1 or 2, **characterized in that** said first actuator means (10) comprise at least one first conveyance duct (32) obtained on said first connection body (3), placed in fluid communication with said first guide chamber (8) and provided to convey a pressurized fluid against said first actuation piston (7) in order to make said first elastic means (9) yield elastically and push said first actuation piston (7) into the other of said first actuation position and said second actuation position.

4. Clamping device according to any one of claims 1 to 3, **characterized in that** the locking portion (21) of said first connection body (3) comprises a plurality of flexible fins (22) extending substantially parallel to said translation direction.

5. Clamping device according to any one of the preceding claims, **characterized in that** in said locking portion (21) there is obtained a containment volume (24), which is at least partially internally delimited by a second lateral surface (26);
said first locking means (6) comprising a pusher body (23), which is slidably inserted into said containment volume (24), it is integrally joined at least in translation with said first actuation piston (7) and it comprises a thrust surface (25) adapted to interfere, directly or indirectly, with said second lateral surface (26) in order to push said locking portion (21) in said expanded configuration when said first actuation piston (7) is in said first actuation position.

6. Clamping device according to claim 5, **characterized in that** said first locking means (6) comprise second elastic means (27), which are arranged in said containment volume (24), are arranged counter-faced to said second lateral surface (26), are susceptible to interfere, directly or indirectly, with the thrust surface (25) of said pusher body (23) and they can be actuated by said pusher body (23) between:
- a release configuration, when said first actuation piston (7) is in said second actuation position, in which said second elastic means (27) are provided with a first radial overall dimension and with a first axial overall dimension so as not to interfere with said second lateral surface (26), and
- a compression configuration, when said first actuation piston (7) is in said first actuation position, in which said second elastic means (27) are provided with a second radial overall dimension greater than said first radial overall dimension and with a second axial overall dimension smaller than said first axial overall dimension so as to interfere with said second lateral surface (26) and push said locking portion (21) into said expanded configuration.

7. Clamping device according to claim 6, **characterized in that** said second elastic means (27) comprise at least one second belleville washer (33).

8. Clamping device according to claim 7, **characterized in that** said at least one second belleville washer (33) extends with annular shape around an extension axis thereof that is substantially parallel to said translation direction, delimits a central opening (28) traversed by said pusher body (23) and it is provided with:
- a larger base (29) thereof, which:
- is arranged, directly or indirectly, resting against an abutment surface (30) extending within said containment volume (24) transversely to said second lateral surface (26), and
- is in contact with said second lateral surface (26);
- and with an opposite smaller base (31), which is susceptible to receive, directly or indirectly, against itself, the thrust surface (25) of said pusher body (23) in order to be actuated between said compression configuration and said release configuration.

9. Clamping device according to any one of the preceding claims, **characterized in that** said first clamping assembly (2) comprises:
- a third connection body (46), which is rotatably connected to said first connection body (3) around at least one rotation axis so that said first connection body (3) and said third connection body (46) are movable one with respect to the other into a plurality of second adjustment positions;
- second locking means (47), which are mechanically associated with said first connection body (3) and with said third connection body (46) and they can be switched between a second constraint condition, in which they lock said first and said third connection body (3, 46) into one of said second adjustment positions, and a second release condition, in which they free said first and said third connection body (3, 46) to mutually rotate one with respect to the other;
- a second actuation piston (48), which is slidably inserted into said first guide chamber (8) in order to translate between a third actuation position, in which it maintains said second locking means (47) in said second constraint condition, and a fourth actuation position, in which it maintains said second locking means (47) in said second release condition;
- third elastic means (50), which are inserted into said first guide chamber (8) and they are provided to force said second actuation piston (48) into one of said third actuation position and said fourth actuation position;
said first actuator means (10) being provided to move said second actuation piston (48) into the other of said third and said fourth actuation position, making said third elastic means (50) yield elastically.

10. Clamping device according to claim 3 and 9, **characterized in that** the first conveyance duct (32) of said first actuator means (10) is provided to convey said pressurised fluid against said second actuation piston (48) so as to make said third elastic means (50) yield elastically and push said second actuation piston (48) into the other of said third actuation position and said fourth actuation position.

11. Clamping device according to claim 9 or 10, **characterized in that** said first connection body (3) is provided with a first sliding surface (52) and said third connection body (46) is provided with a second sliding surface (53);
said second locking means (47) comprising a first pulling element (58), which is mechanically associated with the third connection body (46) and it is integrally joined at least in translation with said second actuation piston (48) to pull, with said second actuation piston (48) in said third actuation position, said first sliding surface (52) in a pressurised manner, directly or indirectly, against said second sliding surface (53).

12. Clamping device according to claim 11, **characterised in that** said first sliding surface (52) and said second sliding surface (53) slide on each other with said first connection body (3) and said third connection body (46) which rotate around the at least one rotation axis;
said first pulling element (58) being integrally joined in translation with said second actuation piston (48) to pull in pressurised abutment said first sliding surface (52) against said second sliding surface (53) with said second actuation piston (48) in said third actuation position.

13. Clamping device according to claim 12, **characterised in that** one of said first sliding surface (52) and said second sliding surface (53) is concave with substantially spherical cap shape and the other of said first sliding surface (52) and said second sliding surface (53) is convex with substantially spherical cap shape, so that said first connection body (3) and said third connection body (46) are rotatably connected to each other around three mutually orthogonal rotation axes.

14. Clamping device according to claim 11, **characterised in that** said first clamping assembly (2) comprises a fourth connection body (100), which:
- is interposed between said first connection body (3) and said third connection body (46),
- is traversed by said first pulling element (58),
- is provided with a third sliding surface (101) in contact with said first sliding surface (52) and with a fourth sliding surface (102) thereof in contact with said second sliding surface (53);
- is slidably associated with said first connection body (3) along an adjustment plane (X) transversal (in particular orthogonal) to said translation direction in a plurality of third adjustment positions, and
- carries rotatably mounted thereon said third connection body (46) around at least one rotation axis so that said first connection body (3) and said third connection body (46) are movable one with respect to the other into said plurality of said second adjustment positions;
said first pulling element (58) being integrally joined in translation with said second actuation piston (48) to pull, with said second actuation piston (48) in said third actuation position, said second sliding surface (53) in pressurised abutment against said fourth sliding surface (102) and said third sliding surface (101) in pressurised abutment against said first sliding surface (52).

15. Clamping device according to claim 14, **characterised in that** said first sliding surface (52) and said third sliding surface (101) are planar and coincide with said adjustment plane (X);
one of said second sliding surface (53) and said fourth sliding surface (102) being concave with substantially spherical cap shape and the other of said second sliding surface (53) and said fourth sliding surface (102) being convex with substantially spherical cap shape, so that said fourth connection body (100) and said third connection body (46) are rotatably connected to each other around three mutually orthogonal rotation axes.

## Patentansprüche

1. Spannvorrichtung zum Halten eines Halbfertigprodukts in Position im Verhältnis zu einer Stützbasis, die Folgendes umfasst:
- mindestens eine erste Spannbaugruppe (2), die dazu bestimmt ist, abnehmbar an einem unter der genannten Stützbasis und dem genannten Halbfertigprodukt befestigt zu werden, und mindestens einen ersten Verbindungskörper (3) umfasst;
- mindestens eine zweite Spannbaugruppe (4), die dazu bestimmt ist, abnehmbar an dem anderen unter dem genannte Halbfertigprodukt und der genannten Stützbasis befestigt zu werden, und mindestens einen zweiten Verbindungskörper (5) umfasst; wobei der genannte erste und der genannte zweite Verbindungskörper (3, 5) sich mechanisch im Eingriff befinden, um sich im Verhältnis zueinander zwischen einer Vielzahl erster Einstellpositionen zu bewegen; wobei der genannte erste und der genannte zweite Verbindungskörper (3, 5) entlang einer Translationsrichtung verschiebbar verbunden sind, um sich im Verhältnis zueinander in der genannten Vielzahl der genannten ersten Einstellpositionen zu bewegen;
- erste Verriegelungsmittel (6), die mechanisch mit dem genannten ersten und dem genannten zweiten Verbindungskörper (3, 5) verbunden sind und zwischen einem ersten Verbindungszustand, in dem sie den genannten ersten und den genannten zweiten Verbindungskörper (3, 5) in einer der genannten ersten Einstellpositionen verriegeln, und einem ersten Freigabezustand, in dem sie den genannten ersten und den genannten zweiten Verbindungskörper (3, 5) freigeben, damit sie sich im Verhältnis zueinander gegenseitig bewegen können, umschaltbar sind;
- einen ersten Betätigungskolben (7), der verschiebbar in eine erste Führungskammer (8) eingesetzt ist, die auf dem genannten ersten Verbindungskörper (3) eingerichtet ist, um sich zwischen einer ersten Betätigungsposition, in der er die genannten ersten Verriegelungsmittel (6) in dem genannten ersten Verbindungszustand hält, und einer zweiten Betätigungsposition, in der er die genannten ersten Verriegelungsmittel (6) in dem genannten ersten Freigabezustand hält, zu verschieben;
- erste elastische Mittel (9), die in die genannte erste Führungskammer (8) eingesetzt und darauf ausgelegt sind, den genannten ersten Betätigungskolben (7) unter Kraftaufwand in eine unter der genannten ersten Betätigungsposition und der genannten zweiten Betätigungsposition zu bringen;
- erste Stellantriebmittel (10), die darauf ausgelegt sind, den genannten ersten Betätigungskolben (7) durch elastisches Nachgeben der genannten ersten elastischen Mittel (9) in die andere unter der genannten ersten und der genannten zweiten Betätigungsposition zu verschieben;
wobei die genannte Spannvorrichtung (1) **dadurch gekennzeichnet ist, dass** der genannte zweite Verbindungskörper (5) mit einem Führungssitz (19) versehen ist, der innen mindestens teilweise durch eine erste Seitenfläche (20) begrenzt ist, und der genannte erste Verbindungskörper (3) mindestens teilweise verschiebbar entlang der genannten Translationsrichtung in den genannten Führungssitz (19) eingesetzt ist;
wobei der genannte erste Verbindungskörper (3) mit einem Verriegelungsabschnitt (21) versehen ist, der in dem genannten Führungssitz (19) enthalten ist und zwischen einer ausgedehnten Konfiguration, in der er einen Druck gegen die genannte erste Seitenfläche (20) ausübt, um zu verhindern, dass der genannte erste Verbindungskörper (3) in dem genannten Führungssitz (19) gleitet, und einer unverformten Konfiguration, in der er keinen Druck gegen die genannte erste Seitenfläche (20) ausübt, verformt werden kann, wodurch der genannten ersten Verbindungskörper (3) in dem genannten Führungssitz (19) gleiten kann;
wobei die genannten ersten Verriegelungsmittel (6) darauf ausgelegt sind, den Verriegelungsabschnitt (21) des genannten ersten Verbindungskörpers (3) in der genannten ausgedehnten Konfiguration zu halten, wenn sie sich in dem genannten ersten Verbindungszustand befinden, und darauf ausgelegt sind, den genannten Verriegelungsabschnitt (21) in der genannten unverformten Konfiguration zu halten, wenn sie sich in dem genannten ersten Freigabezustand befinden.

2. Spannvorrichtung nach Anspruch 1, **dadurch gekennzeichnet, dass** die genannten ersten elastischen Mittel (9) darauf ausgelegt sind, den genannten ersten Betätigungskolben (7) unter Kraftaufwand in die genannte erste Betätigungsposition zu bringen;
wobei die genannten ersten Stellantriebmittel (10) darauf ausgelegt sind, den genannten ersten Betätigungskolben (7) durch elastisches Nachgeben der genannten ersten elastischen Mittel (9) in die genannte zweite Betätigungsposition zu verschieben.

3. Spannvorrichtung nach Anspruch 1 oder 2, **dadurch gekennzeichnet, dass** die genannten ersten Stellantriebmittel (10) mindestens eine erste Förderleitung (32) umfassen, die auf dem genannten ersten Verbindungskörper (3) eingerichtet ist, in Fluidverbindung mit der genannten ersten Führungskammer (8) steht und darauf ausgelegt ist, ein unter Druck stehendes Medium gegen den genannten ersten Betätigungskolben (7) zu fördern, um zu bewirken, dass die genannten ersten elastischen Betätigungsmittel (9) elastisch nachgeben und den genannten ersten Betätigungskolben (7) in die andere unter der genannten ersten Betätigungsposition und der genannten zweiten Betätigungsposition verschieben.

4. Spannvorrichtung nach einem beliebigen der Ansprüche 1 bis 3, **dadurch gekennzeichnet, dass** der Verriegelungsabschnitt (21) des genannten ersten Verbindungskörpers (3) eine Vielzahl von flexiblen Lamellen (22) umfasst, die im Wesentlichen parallel zu der genannten Translationsrichtung verlaufen.

5. Spannvorrichtung nach einem beliebigen der vorangegangenen Ansprüche, **dadurch gekennzeichnet, dass** in dem genannten Verriegelungsabschnitt (21) ein Einschließvolumen (24) eingerichtet ist, das im Inneren mindestens teilweise durch eine zweite Seitenfläche (26) begrenzt ist;
wobei die genannten ersten Verriegelungsmittel (6) einen Schubkörper (23) umfassen, der verschiebbar in das genannte Einschließvolumen (24) eingesetzt ist, mindestens bei Verschiebung mit dem genannten ersten Betätigungskolben (7) fest verbunden ist und eine Schubfläche (25) aufweist, die geeignet ist, direkt oder indirekt mit der genannten zweiten Seitenfläche (26) zusammenzuwirken, um den genannten Verriegelungsabschnitt (21) in die genannte ausgedehnte Konfiguration zu schieben, wenn sich der genannte erste Betätigungskolben (7) in der genannten ersten Betätigungsposition befindet.

6. Spannvorrichtung nach Anspruch 5, **dadurch gekennzeichnet, dass** die genannten ersten Verriegelungsmittel (6) zweite elastische Mittel (27) umfassen, die in dem genannten Einschließvolumen (24) angeordnet sind, der genannten zweiten Seitenfläche (26) gegenüberliegen, geeignet sind, direkt oder indirekt mit der Schubfläche (25) des genannten Schubkörpers (23) zusammenzuwirken und von dem genannten Schubkörper (23) betätigt werden können, zwischen:
- einer Freigabekonfiguration, wenn sich der genannte erste Betätigungskolben (7) in der genannten zweiten Betätigungsposition befindet, wobei die genannten zweiten elastischen Mittel (27) mit einem ersten radialen und einem ersten axialen Außenmaß versehen sind, um mit der genannten zweiten Seitenfläche (26) nicht zusammenzuwirken, und
- einer Kompressionskonfiguration, wenn sich der genannte erste Betätigungskolben (7) in der genannten ersten Betätigungsposition befindet, wobei die genannten zweiten elastischen Mittel (27) mit einem zweiten radialen Außenmaß, das größer als das genannte erste radiale Außenmaß ist, und mit einem zweiten axialen Außenmaß, das kleiner als das genannte erste axiale Außenmaß ist, versehen sind, um mit der genannten zweiten Seitenfläche (26) zusammenzuwirken und den genannten Verriegelungsabschnitt (21) in die genannte ausgedehnte Konfiguration zu schieben.

7. Spannvorrichtung nach Anspruch 6, **dadurch gekennzeichnet, dass** die genannten zweiten elastischen Mittel (27) mindestens eine zweite Tellerfeder (33) umfassen.

8. Spannvorrichtung nach Anspruch 7, **dadurch gekennzeichnet, dass** die genannte mindestens eine zweite Tellerfeder (33) ringförmig um eine eigene, im Wesentlichen parallel zu der genannten Translationsrichtung verlaufende Entwicklungsachse verläuft, eine zentrale Öffnung (28) begrenzt, die von dem genannten Schubkörper (23) überquert wird, und mit Folgendem ausgestattet ist:
- einer eigenen größeren Basis (29), die:
- direkt oder indirekt gegen eine Anschlagfläche (30) anliegend angeordnet ist, die innerhalb des genannten Einschließvolumens (24) quer zu der genannten zweiten Seitenfläche (26) verläuft, und
- sich mit der genannten zweiten Seitenfläche (26) in Kontakt befindet;
- und mit einer gegenüberliegenden kleineren Basis (31), die geeignet ist, direkt oder indirekt, die Schubfläche (25) des genannten Schubkörpers (23) anschlagend aufzunehmen, um zwischen der genannten Kompressionskonfiguration und der genannten Freigabekonfiguration betätigt zu werden.

9. Spannvorrichtung nach einem beliebigen der vorangegangenen Ansprüche, **dadurch gekennzeichnet, dass** die genannte erste Spannbaugruppe (2) Folgendes umfasst:
- einen dritten Verbindungskörper (46), der mit dem genannten ersten Verbindungskörper (3) um mindestens eine Drehachse drehbar verbunden ist, um dafür zu sorgen, dass der genannte erste Verbindungskörper (3) und der genannte dritte Verbindungskörper (46) im Verhältnis zueinander in einer Vielzahl von zweiten Einstellpositionen beweglich sind;
- zweite Verriegelungsmittel (47), die mechanisch mit dem genannten ersten Verbindungskörper (3) und dem genannten dritten Verbindungskörper (46) verbunden sind und zwischen einem zweiten Verbindungszustand, in dem sie den genannten ersten und den genannten dritten Verbindungskörper (3, 46) in einer der genannten zweiten Einstellpositionen verriegeln, und einem zweiten Freigabezustand, in dem sie den genannten ersten und den genannten dritten Verbindungskörper (3, 46) freigeben, umschaltbar sind, damit sie im Verhältnis zueinander gegenseitig drehen;
- einen zweiten Betätigungskolben (48), der verschiebbar in die genannte erste Führungskammer (8) eingesetzt ist, um sich zwischen einer dritten Betätigungsposition, in der er die genannten zweiten Verriegelungsmittel (47) in dem genannten zweiten Verbindungszustand hält, und einer vierten Betätigungsposition, in der er die genannten zweiten Verriegelungsmittel (47) in dem genannten zweiten Freigabezustand hält, zu verschieben;
- dritte elastische Mittel (50), die in die genannte erste Führungskammer (8) eingesetzt und darauf ausgelegt sind, den genannten zweiten Betätigungskolben (48) unter Kraftaufwand in eine unter der genannten dritten Betätigungsposition und der genannten vierten Betätigungsposition zu bringen;
wobei die genannten Stellantriebmittel (10) darauf ausgelegt sind, den genannten zweiten Betätigungskolben (48) durch elastisches Nachgeben der genannten dritten elastischen Mittel (50) in die andere unter der genannten dritten und der genannten vierten Betätigungsposition zu verschieben.

10. Spannvorrichtung nach Anspruch 3 und 9, **dadurch gekennzeichnet, dass** die erste Förderleitung (32) der genannten ersten Stellantriebmittel (10) darauf ausgelegt ist, das genannte unter Druck stehende Medium gegen den genannten zweiten Betätigungskolben (48) zu fördern, um die genannten dritten elastischen Mittel (50) elastisch nachgeben zu lassen und den genannten zweiten Betätigungskolben (48) in die andere unter der genannten dritten Betätigungsposition und der genannten vierten Betätigungsposition zu schieben.

11. Spannvorrichtung nach Anspruch 9 oder 10, **dadurch gekennzeichnet, dass** der genannte erste Verbindungskörper (3) mit einer ersten Gleitfläche (52) und der genannte dritte Verbindungskörper (46) mit einer zweiten Gleitfläche (53) versehen ist;
wobei die genannten zweiten Verriegelungsmittel (47) ein erstes Zugelement (58) umfassen, das mechanisch mit dem dritten Verbindungskörper (46) verbunden ist und mindestens bei Verschiebung mit dem genannten zweiten Betätigungskolben (48) fest verbunden ist, um, wenn sich der genannte zweite Betätigungskolben (48) in der genannten dritten Betätigungsposition befindet, die genannte erste Gleitfläche (52) unter Druck, direkt oder indirekt, gegen die genannte zweite Gleitfläche (53) zu ziehen.

12. Spannvorrichtung nach Anspruch 11, **dadurch gekennzeichnet, dass** die genannte erste Gleitfläche (52) und die genannte zweite Gleitfläche (53) aufeinander gleiten, wobei der genannte erste Verbindungskörper (3) und der genannte dritte Verbindungskörper (46) um die mindestens eine Drehachse drehen;
wobei das genannte erste Zugelement (58) bei Verschiebung mit dem genannten zweiten Betätigungskolben (48) fest verbunden ist, um die genannte erste Gleitfläche (52) unter Druck anschlagend gegen die genannte zweite Gleitfläche (53) zu ziehen, wenn sich der genannte zweite Betätigungskolben (48) in der genannten dritten Betätigungsposition befindet.

13. Spannvorrichtung nach Anspruch 12, **dadurch gekennzeichnet, dass** eine unter der genannten ersten Gleitfläche (52) und der genannten zweiten Gleitfläche (53) konkav ist und im Wesentlichen die Form eines Kugelsegments aufweist, und die andere unter der genannten ersten Gleitfläche (52) und der genannten zweiten Gleitfläche (53) konvex ist und im Wesentlichen die Form eines Kugelsegments aufweist, so dass der genannte erste Verbindungskörper (3) und der genannte dritte Verbindungskörper (46) um drei zueinander orthogonale Drehachsen drehbar miteinander verbunden sind.

14. Spannvorrichtung nach Anspruch 11, **dadurch gekennzeichnet, dass** die genannte erste Spannbaugruppe (2) einen vierten Verbindungskörper (100) umfasst, der
- zwischen dem genannten ersten Verbindungskörper (3) und dem genannten dritten Verbindungskörper (46) eingefügt ist,
- von dem genannten ersten Zugelement (58) überquert wird,
- mit einer eigenen dritten Gleitfläche (101) in Kontakt mit der genannten ersten Gleitfläche (52) und einer eigenen vierten Gleitfläche (102) in Kontakt mit der genannten zweiten Gleitfläche (53) versehen ist;
- mit dem genannten ersten Verbindungskörper (3) entlang einer Einstellebene (X) quer zu der genannten Translationsrichtung in einer Vielzahl von dritten Einstellpositionen verschiebbar verbunden ist, und
- den genannten dritten Verbindungskörper (46) um mindestens eine Drehachse drehbar montiert trägt, um dafür zu sorgen, dass der genannte erste Verbindungskörper (3) und der genannte dritte Verbindungskörper (46) in der genannten Vielzahl von genannten zweiten Einstellpositionen im Verhältnis zueinander beweglich sind;
wobei das genannte erste Zugelement (58) bei Verschiebung mit dem genannten zweiten Betätigungskolben (48) fest verbunden ist, um, wenn der genannte zweite Betätigungskolben (48) sich in der genannten dritten Betätigungsposition befindet, die genannte zweite Gleitfläche (53) unter Druck anschlagend gegen die genannte vierte Gleitfläche (102) und die genannte dritte Gleitfläche (101) unter Druck anschlagend gegen die genannte erste Gleitfläche (52) zu ziehen.

15. Spannvorrichtung nach Anspruch 14, **dadurch gekennzeichnet, dass** die genannte erste Gleitfläche (52) und die genannte dritte Gleitfläche (101) eben sind und mit der genannten Einstellebene (X) übereinstimmen;
wobei eine unter der genannten zweiten Gleitfläche (53) und der genannten vierten Gleitfläche (102) konkav ist und im Wesentlichen die Form eines Kugelsegments aufweist, und die andere unter der genannten zweiten Gleitfläche (53) und der genannten vierten Gleitfläche (102) konvex ist und im Wesentlichen die Form eines Kugelsegments aufweist, so dass der genannte vierte Verbindungskörper (100) und der genannte dritte Verbindungskörper (46) drehbar miteinander um drei zueinander orthogonale Drehachsen verbunden sind.

## Revendications

1. Dispositif de serrage pour maintenir un produit semi-fini en position par rapport à une base d'appui, comprenant :
- au moins un premier ensemble de serrage (2), qui est destiné à être fixé de manière amovible à l'un de ladite base d'appui et dudit produit semi-fini, et qui comprend au moins un premier corps de connexion (3) ;
- au moins un deuxième ensemble de serrage (4), qui est destiné à être fixé de manière amovible à l'autre dudit produit semi-fini et de ladite base d'appui et qui comprend au moins un deuxième corps de connexion (5) ; lesdits premier et deuxième corps de connexion (3, 5) étant engagés mécaniquement pour se déplacer réciproquement l'un par rapport à l'autre parmi une pluralité de premières positions de réglage ; lesdits premier et deuxième corps de connexion (3, 5) étant associés de manière coulissante le long d'une direction de translation pour se déplacer l'un par rapport à l'autre dans ladite pluralité desdites premières positions de réglage ;
- des premiers moyens de blocage (6), qui sont associés mécaniquement audit premier et audit deuxième corps de connexion (3, 5) et peuvent être commutés entre un premier état de contrainte, dans lequel ils bloquent lesdits premier et deuxième corps de connexion (3, 5) dans l'une desdites premières positions de réglage, et un premier état de libération, dans lequel ils libèrent lesdits premier et deuxième corps de connexion (3, 5) pour qu'ils se déplacent réciproquement l'un par rapport à l'autre ;
- un premier piston d'entraînement (7), qui est inséré de manière coulissante dans une première chambre de guidage (8) obtenue sur ledit premier corps de connexion (3) pour se déplacer en translation entre une première position d'entraînement, dans laquelle il maintient lesdits premiers moyens de blocage (6) dans ledit premier état de contrainte, et une deuxième position d'entraînement, dans laquelle il maintient lesdits premiers moyens de blocage (6) dans ledit premier état de libération ;
- des premiers moyens élastiques (9), qui sont insérés dans ladite première chambre de guidage (8) et sont prédisposés pour forcer ledit premier piston d'entraînement (7) dans l'une de ladite première position d'entraînement et de ladite deuxième position d'entraînement ;
- des premiers moyens actionneurs (10), qui sont prédisposés pour déplacer ledit premier piston d'entraînement (7) dans l'autre de ladite première et deuxième position d'entraînement, en amenant lesdits premiers moyens élastiques (9) à céder élastiquement ;
ledit dispositif de serrage (1) étant **caractérisé en ce que** ledit deuxième corps de connexion (5) est pourvu d'un siège de guidage (19) délimité en son sein au moins partiellement par une première surface latérale (20) et ledit premier corps de connexion (3) est inséré au moins partiellement dans ledit siège de guidage (19) de manière coulissante le long de ladite direction de translation ;
ledit premier corps de connexion (3) étant pourvu d'une partie de blocage (21) contenue dans ledit siège de guidage (19) et pouvant être déformée entre une configuration expansée, dans laquelle elle exerce une pression contre ladite première surface latérale (20) pour empêcher ledit premier corps de connexion (3) de coulisser dans ledit siège de guidage (19), et une configuration non déformée, dans laquelle elle n'exerce pas de pression contre ladite première surface latérale (20), permettant audit premier corps de connexion (3) de coulisser dans ledit siège de guidage (19) ;
lesdits premiers moyens de blocage (6) étant prédisposés pour maintenir la partie de blocage (21) dudit premier corps de connexion (3) dans ladite configuration expansée lorsqu'ils se trouvent dans ledit premier état de contrainte et étant prédisposés pour maintenir ladite partie de blocage (21) dans ladite configuration non déformée lorsqu'ils se trouvent dans ledit premier état de libération.

2. Dispositif de serrage selon la revendication 1, **caractérisé en ce que** lesdits premiers moyens élastiques (9) sont prédisposés pour forcer ledit premier piston d'entraînement (7) dans ladite première position d'entraînement ;
lesdits premiers moyens actionneurs (10) étant prédisposés pour déplacer ledit premier piston d'entraînement (7) dans ladite deuxième position d'entraînement en amenant lesdits premiers moyens élastiques (9) à céder élastiquement.

3. Dispositif de serrage selon la revendication 1 ou 2, **caractérisé en ce que** lesdits premiers moyens actionneurs (10) comprennent au moins un premier conduit d'acheminement (32) obtenu sur ledit premier corps de connexion (3), placé en communication fluidique avec ladite première chambre de guidage (8) et prédisposé pour acheminer un fluide sous pression contre ledit premier piston d'entraînement (7) afin d'amener lesdits premiers moyens élastiques (9) à céder élastiquement et de pousser ledit premier piston d'entraînement (7) dans l'autre de ladite première position d'entraînement et de ladite deuxième position d'entraînement.

4. Dispositif de serrage selon l'une quelconque des revendications 1 à 3, **caractérisé en ce que** la partie de blocage (21) dudit premier corps de connexion (3) comprend une pluralité d'ailettes flexibles (22) s'étendant sensiblement de manière parallèle à ladite direction de translation.

5. Dispositif de serrage selon l'une quelconque des revendications précédentes, **caractérisé en ce que**, dans ladite partie de blocage (21), un volume de confinement (24) est obtenu, qui est délimité en son sein, au moins partiellement, par une deuxième surface latérale (26) ;
lesdits premiers moyens de blocage (6) comprenant un corps de poussée (23), qui est inséré de manière coulissante dans ledit volume de confinement (24), et est solidaire au moins en translation dudit premier piston d'entraînement (7), et comprend une surface de poussée (25) apte à interférer, directement ou indirectement, avec ladite deuxième surface latérale (26) pour pousser ladite partie de blocage (21) dans ladite configuration expansée lorsque ledit premier piston d'entraînement (7) se trouve dans ladite première position d'entraînement.

6. Dispositif de serrage selon la revendication 5, **caractérisé en ce que** lesdits premiers moyens de blocage (6) comprennent des deuxièmes moyens élastiques (27), qui sont disposés dans ledit volume de confinement (24), sont opposés à ladite deuxième surface latérale (26), sont susceptibles d'interférer, directement ou indirectement, avec la surface de poussée (25) dudit corps de poussée (23) et peuvent être entraînés par ledit corps de poussée (23) entre :
- une configuration de relâchement, lorsque ledit premier piston d'entraînement (7) se trouve dans ladite deuxième position d'entraînement, dans laquelle lesdits deuxièmes moyens élastiques (27) sont pourvus d'un premier encombrement radial et d'un premier encombrement axial de manière à ne pas interférer avec ladite deuxième surface latérale (26), et
- une configuration de compression, lorsque ledit premier piston d'entraînement (7) se trouve dans ladite première position d'entraînement, dans laquelle lesdits deuxièmes moyens élastiques (27) sont pourvus d'un deuxième encombrement radial plus grand que ledit premier encombrement radial et d'un deuxième encombrement axial plus petit que ledit premier encombrement axial pour interférer avec ladite deuxième surface latérale (26) et pousser ladite partie de blocage (21) dans ladite configuration expansée.

7. Dispositif de serrage selon la revendication 6, **caractérisé en ce que** lesdits deuxièmes moyens élastiques (27) comprennent au moins une deuxième rondelle sphérique (33).

8. Dispositif de serrage selon la revendication 7, **caractérisé en ce que** ladite au moins une deuxième rondelle sphérique (33) se développe avec une forme annulaire autour de son propre axe de développement sensiblement parallèle à ladite direction de translation, délimitant une ouverture centrale (28) traversée par ledit corps de poussée (23) et est pourvue de :
- sa propre base majeure (29), qui :
- est disposée, directement ou indirectement, en appui contre une surface de rencontre (30) s'étendant à l'intérieur dudit volume de confinement (24) transversalement à ladite deuxième surface latérale (26), et
- est en contact avec ladite deuxième surface latérale (26) ;
- et une base mineure opposée (31), qui est susceptible de recevoir, directement ou indirectement, contre elle-même la surface de poussée (25) dudit corps de poussée (23) pour être entraîné entre ladite configuration de compression et ladite configuration de relâchement.

9. Dispositif de serrage selon l'une quelconque des revendications précédentes, **caractérisé en ce que** ledit premier ensemble de serrage (2) comprend :
- un troisième corps de connexion (46), qui est relié de manière rotative audit premier corps de connexion (3) autour d'au moins un axe de rotation, de manière à ce que ledit premier corps de connexion (3) et ledit troisième corps de connexion (46) soient mobiles l'un par rapport à l'autre dans une pluralité de deuxièmes positions de réglage ;
- des deuxièmes moyens de blocage (47), qui sont associés mécaniquement audit premier corps de connexion (3) et audit troisième corps de connexion (46) et peuvent être commutés entre un second état de contrainte, dans lequel ils bloquent lesdits premier et troisième corps de connexion (3, 46) dans l'une desdites deuxièmes positions de réglage, et un deuxième état de libération, dans lequel ils libèrent ledit premier et ledit troisième corps de connexion (3, 46) pour qu'ils tournent réciproquement l'un par rapport à l'autre ;
- un deuxième piston d'entraînement (48), qui est inséré de manière coulissante dans ladite première chambre de guidage (8) pour se déplacer en translation entre une troisième position d'entraînement, dans laquelle il maintient lesdits deuxièmes moyens de blocage (47) dans ladite deuxième condition de contrainte, et une quatrième position d'entraînement, dans laquelle il maintient lesdits deuxièmes moyens de blocage (47) dans ledit deuxième état de libération ;
- des troisièmes moyens élastiques (50), qui sont insérés dans ladite première chambre de guidage (8) et sont prédisposés pour forcer ledit deuxième piston d'entraînement (48) dans l'une de ladite troisième position d'entraînement et de ladite quatrième position d'entraînement ;
lesdits premiers moyens actionneurs (10) étant prédisposés pour déplacer ledit deuxième piston d'entraînement (48) dans l'autre de ladite troisième et de ladite quatrième position d'entraînement en amenant lesdits troisièmes moyens élastiques (50) à céder élastiquement.

10. Dispositif de serrage selon la revendication 3 et 9, **caractérisé en ce que** le premier conduit d'acheminement (32) desdits premiers moyens actionneurs (10) est prédisposé pour acheminer ledit fluide sous pression contre ledit deuxième piston d'entraînement (48) afin d'amener lesdits troisièmes moyens élastiques (50) à céder élastiquement et de pousser ledit deuxième piston d'entraînement (48) dans l'autre de ladite troisième position d'entraînement et de ladite quatrième position d'entraînement.

11. Dispositif de serrage selon la revendication 9 ou 10, **caractérisé en ce que** ledit premier corps de connexion (3) est pourvu d'une première surface de frottement (52) et ledit troisième corps de connexion (46) est pourvu d'une deuxième surface de frottement (53) ;
lesdits deuxièmes moyens de blocage (47) comprenant un premier élément tirant (58), qui est associé mécaniquement au troisième corps de connexion (46) et est solidaire, au moins en translation, dudit deuxième piston d'entraînement (48) pour tirer, avec ledit deuxième piston d'entraînement (48) dans ladite troisième position d'entraînement, ladite première surface de frottement (52) sous pression, directement ou indirectement, contre ladite deuxième surface de frottement (53).

12. Dispositif de serrage selon la revendication 11, **caractérisé en ce que** ladite première surface de frottement (52) et ladite deuxième surface de frottement (53) glissent l'une sur l'autre avec ledit premier corps de connexion (3) et ledit troisième corps de connexion (46) qui tournent autour dudit au moins un axe de rotation ;
ledit premier élément tirant (58) est solidaire en translation dudit deuxième piston d'entraînement (48) afin de tirer en butée sous pression ladite première surface de frottement (52) contre ladite deuxième surface de frottement (53) lorsque ledit deuxième piston d'entraînement (48) se trouve dans ladite troisième position d'entraînement.

13. Dispositif de serrage selon la revendication 12, **caractérisé en ce que** l'une de ladite première surface de frottement (52) et de ladite deuxième surface de frottement (53) est concave avec une forme sensiblement de calotte sphérique et l'autre de ladite première surface de frottement (52) et de ladite deuxième surface de frottement (53) est convexe avec une forme sensiblement de calotte sphérique, de manière à ce que ledit premier corps de connexion (3) et ledit troisième corps de connexion (46) soient reliés de manière rotative l'un à l'autre autour de trois axes de rotation mutuellement orthogonaux.

14. Dispositif de serrage selon la revendication 11, **caractérisé en ce que** ledit premier ensemble de serrage (2) comprend un quatrième corps de connexion (100), qui :
- est interposé entre ledit premier corps de connexion (3) et ledit troisième corps de connexion (46),
- est traversé par ledit premier élément tirant (58),
- est pourvu d'une troisième surface de frottement (101) en contact avec ladite première surface de frottement (52) et d'une quatrième surface de frottement (102) en contact avec ladite deuxième surface de frottement (53) ;
- est associé de manière coulissante audit premier corps de connexion (3) le long d'un plan de réglage (X) transversal à ladite direction de translation dans une pluralité de troisièmes positions de réglage, et
- porte ledit troisième corps de connexion (46) monté de manière rotative autour d'au moins un axe de rotation de manière à ce que ledit premier corps de connexion (3) et ledit troisième corps de connexion (46) soient mobiles l'un par rapport à l'autre dans ladite pluralité desdites deuxièmes positions de réglage ;
ledit premier élément tirant (58) étant solidaire en translation dudit deuxième piston d'entraînement (48) afin de tirer, avec ledit deuxième piston d'entraînement (48) dans ladite troisième position d'entraînement, ladite deuxième surface de frottement (53) en butée sous pression contre ladite quatrième surface de frottement (102) et ladite troisième surface de frottement (101) en butée sous pression contre ladite première surface de frottement (52).

15. Dispositif de serrage selon la revendication 14, **caractérisé en ce que** ladite première surface de frottement (52) et ladite troisième surface de frottement (101) sont planes et coïncident avec ledit plan de réglage (X) ;
l'une de ladite deuxième surface de frottement (53) et de ladite quatrième surface de frottement (102) étant concave avec une forme sensiblement de calotte sphérique, et l'autre de ladite deuxième surface de frottement (53) et de ladite quatrième surface de frottement (102) étant convexe avec une forme sensiblement de calotte sphérique, de façon à ce que ledit quatrième corps de connexion (100) et ledit troisième corps de connexion (46) soient reliés de manière rotative l'un à l'autre autour de trois axes de rotation mutuellement orthogonaux.
